# EUROPEAN PATENT SPECIFICATION

(11) **EP 3 757 924 B1**
(45) Date of publication and mention of the grant of the patent: **06.12.2023**
(21) Application number: 18915634.2
(22) Date of filing: 26.10.2018
(51) Int. Cl.: G06Q 30/02

(54) **SERVICE RECOMMENDATION METHOD AND RELATED DEVICE**
VERFAHREN ZUR DIENSTEMPFEHLUNG UND ZUGEHÖRIGE VORRICHTUNG
PROCÉDÉ DE RECOMMANDATION DE SERVICE ET DISPOSITIF ASSOCIÉ

(30) Priority: 17.04.2018 CN 201810343194
(43) Date of publication of application: 30.12.2020
(73) Proprietor: HUAWEI TECHNOLOGIES CO., LTD., Shenzhen, Guangdong 518129 (CN)
(72) Inventor: CHEN, Qiang, Shenzhen, Guangdong 518129, (CN); WENG, Xinyu, Shenzhen, Guangdong 518129, (CN)
(74) Representative: MERH-IP Matias Erny Reichl Hoffmann Patentanwälte PartG mbB
(86) International application number: PCT/CN2018/112055
(87) International publication number: WO 2019/200879

(56) References cited:
- CN-A- 105 472 551
- CN-A- 105 472 580
- CN-A- 105 472 580
- US-A1- 2009 192 702
- US-A1- 2016 142 882
- US-B1- 8 588 821

## Description

### TECHNICAL FIELD

This application relates to the terminal field, and in particular, to a service recommendation method and a related apparatus.

### BACKGROUND

Currently, recommended service content (such as a navigation service, a taxi service, music, and weather) of a mobile phone is mainly service content of interest that is recommended to a user based on a use habit, a preference, and a use scenario of the user. For example, a song that the user often listens to is recommended to the user based on a music listening habit and a preference of the user in a week. For another example, when the user is waiting at an airport and is about to leave for Beijing, and the user queries weather in Beijing three days ago, the weather in Beijing is recommended to the user. In this manner, relatively simple service content is recommended to the user.

The document US 2009/192702 A1 describes a technique for providing a mobile device user with a "when to leave" alarm on his or her mobile device. The user has scheduled an appointment at a given time and location in the user's personal information manager (PIM) executing on the mobile device. A representative PIM is a calendar on the mobile device. The "when to leave" alarm is provided to the end user in the form of a display widget that automatically activates a given time (e.g., 30 minutes) before a latest departure time for an event in the user's PIM.
The document US 8 588 821 B1 describes a mobile computing device automatically outputting a notification when a weather prediction for at least one of the one or more locations exceeds a weather severity threshold.
The document US 2016/142882 A1 describes techniques for providing a meeting notification and automatic modification service. A system is configured to identify an appointment in a calendar application, identify a geographic location of the appointment, and identify, before the appointment time, a geographic location of a first participant of the appointment. Based on the geographic information, the system identifies a route extending from the geographic location of the first participant to the geographic location of the appointment, and a travel time associated with the route.

### SUMMARY

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of this application provide a service recommendation method and a related apparatus. Embodiments are used to overcome a prior-art problem of simple recommended service content.

According to a first aspect, an embodiment of this application provides a service recommendation method for a system architecture, including:
sending by the terminal device a system account obtaining request to the service distribution platform;
receiving a second response message, wherein the second response message is used to respond to the system account obtaining request, and the second response message carries the system account of the user;
sending by the terminal device an account binding request to the third-party server; wherein the account binding request carries the system account of the user;
receiving by the terminal device (101) event information including purchasing a ticket triggered by the user on the third-party server (103) when the system account is bound with a third-party account, where the event information includes an event arrival time; generating and displaying one or more first service items at a first moment, where the one or more first service items are related to at least a time interval t1 between the event arrival time and the first moment, wherein the one or more first service items may be presented as a hyperlink and/or an SMS message and/or a picture and/or a card; and generating and displaying one or more second service items at a second moment, where the one or more second service items are related to at least a time interval t2 between the event arrival time and the second moment, wherein the one or more second service items may be presented as a hyperlink and/or an SMS message and/or a picture and/or a card, where the first moment is before the second moment, and the one or more first service items are not completely the same as the one or more second service items. Different service items are recommended to the user at different moments before the event arrival time or at different moments after the event arrival time, to overcome a prior-art problem of simple recommended service content.

Further, the one or more first service items are further related to first user location information;
the one or more second service items are further related to second user location information; and the first user location information is location information of the user at the first moment, and the second user location information is location information of the user at the second moment. Different service items are recommended to the user at different moments before or after the event arrival time at different locations of the user, so that not only the prior-art problem of simple recommended service content is further overcome, but also recommended content is more accurate.

Further, the one or more first service items are carried on a first recommendation card; or the one or more second service items are carried on a second recommendation card. A service item is carried on a card, so that the user can easily view the service item.

In a possible embodiment, the event information further includes an event occurrence location; the one or more first service items are further related to the event occurrence location; and the one or more second service items are further related to the event occurrence location. Different service items are recommended to the user at different moments before or after the event arrival time at different locations of the user and/or at the event occurrence location, so that not only the prior-art problem of simple recommended service content is overcome, but also recommended content is more accurate. In a possible embodiment, the one or more first service items are further related to a user's historical access service type; and the one or more second service items are further related to the user's historical access service type. Different service items are recommended to the user at different moments before or after the event arrival time at different locations of the user or at the event occurrence location and/or based on the user's historical access service type, so that not only the prior-art problem of simple recommended service content is overcome, but also recommended content is more accurate.

In a possible embodiment, after the receiving event information that is sent by a service distribution platform, the method further includes: obtaining and displaying one or more reminder items, where the one or more reminder items are related to the event information.

In a possible embodiment, the method further includes:
obtaining a reminder type of the reminder item based on a priority of the reminder item; sending the reminder type of the reminder item to the service distribution platform; and receiving a reminder message that is sent by the service distribution platform based on the reminder type of the reminder item, where the reminder message is used to remind the user that an event is about to arrive.

In a possible embodiment, the method further includes:
receiving, at a specified moment, the reminder message sent by the service distribution platform, where the reminder message is used to remind the user that the event is about to arrive, and a reminder type of the reminder message corresponds to the priority of the reminder item.

In a possible embodiment, the event information further includes the event occurrence location, and before the obtaining a reminder type of the reminder card based on a priority of the reminder item, the method further includes:
determining the priority of the reminder item based on a time interval t and a distance d; and sending, to the service distribution platform, the reminder type that is of the reminder message and that corresponds to the priority of the reminder item, where the time interval t is an interval between the specified moment and the event arrival moment, and the distance d is a distance between a location of the user at the specified time and the event occurrence location.

In a possible embodiment, the determining the priority of the reminder item based on a time interval t and a distance d includes:
determining the priority of the reminder item based on a relationship between the time interval t and a time threshold and a relationship between the distance d and a distance threshold.

In a possible embodiment, the one or more reminder items are carried on the reminder card.

In a possible embodiment, a service recommendation method includes:
after event information that is sent by a third-party server and that is subscribed to by a user is received, sending the event information to a terminal device;
receiving a reminder type that is of a reminder item and that is sent by the terminal device, where the reminder type is related to a priority of the reminder item; and
sending a reminder message to the terminal device based on the reminder type of the reminder item, where the reminder message is used to remind the user that an event is about to arrive.

In a possible embodiment, the reminder item is carried on a reminder card.

In a possible embodiment, a terminal device includes:
a receiving unit, configured to receive event information that is sent by a service distribution platform and that is subscribed to by a user, where the event information includes an event arrival time;
a generation unit, configured to: generate one or more first service items at a first moment, and generate one or more second service items at a second moment; and
a display unit, configured to: display the one or more first service items after the generation unit generates the one or more first service items, and display the one or more second service items after the generation unit generates the one or more second service items, where the one or more first service items are related to at least a time interval t1 between the event arrival time and the first moment, and the one or more second service items are related to at least a time interval t2 between the event arrival time and the second moment, where
the first moment is before the second moment, and the one or more first service items are not completely the same as the one or more second service items.

In a possible embodiment, the one or more first service items are further related to first user location information;
the one or more second service items are further related to second user location information; and
the first user location information is location information of the user at the first moment, and the second user location information is location information of the user at the second moment.

In a possible embodiment, the event information further includes an event occurrence location; the one or more first service items are further related to the event occurrence location; and the one or more second service items are further related to the event occurrence location.

In a possible embodiment, the one or more first service items are further related to a user's historical access service type; and the one or more second service items are further related to the user's historical access service type.

In a possible embodiment, the one or more first service items are carried on a first recommendation card; or the one or more second service items are carried on a second recommendation card.

In a possible embodiment, after the receiving unit receives the event information that is sent by the service distribution platform, the terminal device further includes:
an obtaining unit, configured to obtain one or more reminder items, where the one or more reminder items are related to the event information, where
the display unit is further configured to display the one or more reminder items.

In a possible embodiment, the terminal device further includes a sending unit, where
the obtaining unit is further configured to obtain a reminder type of the reminder item based on a priority of the reminder item;
the sending unit is configured to send the reminder type of the reminder item to the service distribution platform; and
the receiving unit is further configured to receive a reminder message that is sent by the service distribution platform based on the reminder type of the reminder item, where the reminder message is used to remind the user that an event is about to arrive.

In a possible embodiment, the event information further includes the event occurrence location, and before the obtaining unit obtains a reminder type of the reminder card based on the priority of the reminder item, the terminal device further includes:
a determining unit, configured to determine the priority of the reminder item based on a time interval t and a distance d, where
the sending unit is further configured to send, to the service distribution platform, a reminder type that is of a reminder message and that corresponds to the priority of the reminder item, where
the time interval t is an interval between the specified moment and the event arrival moment, and the distance d is a distance between a location of the user at the specified time and the event occurrence location.

In a possible embodiment, the determining unit is specifically configured to:
determine the priority of the reminder item based on a relationship between the time interval t and a time threshold and a relationship between the distance d and a distance threshold.

In a possible embodiment, the one or more reminder items are carried on the reminder card.

In a possible embodiment, a service distribution platform includes:
a sending unit, configured to: after a receiving unit receives event information that is sent by a third-party server and that is subscribed to by a user, send the event information to a terminal device, where
the receiving unit is further configured to receive a reminder type that is of a reminder item and that is sent by the terminal device, where the reminder type is related to a priority of the reminder item; and
the sending unit is further configured to send a reminder message to the terminal device based on the reminder type of the reminder item, where the reminder message is used to remind the user that an event is about to arrive.

In a possible embodiment, the reminder item is carried on a reminder card.

According to a second aspect, an embodiment of this application further provides a terminal device, including: a memory, configured to store an instruction; and
at least one processor, coupled to the memory, where
when the at least one processor executes the instruction, the instruction enables the processor to perform all or some methods according to the first aspect.

According to a third aspect, an embodiment of this application further provides a service distribution platform, including: a memory, configured to store an instruction; and at least one processor, coupled to the memory, where
when the at least one processor executes the instruction, the instruction enables the processor to perform all or some methods according to the second aspect.

According to a fourth aspect, an embodiment of this application further provides a computer storage medium, where the computer storage medium stores a computer program, the computer program includes a program instruction, and when the program instruction is executed by a processor, the processor is enabled to perform all or some methods according to the first aspect.

These aspects or other aspects in this application are clearer and more intelligible in descriptions in the following embodiments.

### BRIEF DESCRIPTION OF DRAWINGS

To describe the technical solutions in the embodiments of this application more clearly, the following briefly describes the accompanying drawings required for describing the embodiments or the prior art. Definitely, the accompanying drawings in the following description merely show some embodiments of this application, and a person of ordinary skill in the art may still derive other drawings from these accompanying drawings without creative efforts.
FIG. 1 is a schematic diagram of an application scenario of a service recommendation method according to an embodiment of this application;
FIG. 2 is a schematic flowchart of a service recommendation method according to an embodiment of this application;
FIG. 3 is a schematic diagram of effects of a reminder card and a recommendation card according to an embodiment of this application;
FIG. 4 is a schematic flowchart of another service recommendation method according to an embodiment of this application;
FIG. 5A and FIG. 5B are a schematic flowchart of interaction of a service recommendation method according to an embodiment of this application;
FIG. 6A and FIG. 6B are a schematic flowchart of interaction of another service recommendation method according to an embodiment of this application;
FIG. 7 is a schematic diagram of effects of another reminder card and another recommendation card according to an embodiment of this application;
FIG. 8 is a schematic diagram of effects of another reminder card and another recommendation card according to an embodiment of this application;
FIG. 9 is a schematic diagram of effects of another reminder card and another recommendation card according to an embodiment of this application;
FIG. 10 is a schematic diagram of effects of a recommendation card according to an embodiment of this application;
FIG. 11 is a schematic structural diagram of a terminal device according to an embodiment of this application;
FIG. 12 is a schematic structural diagram of a service distribution platform according to an embodiment of this application;
FIG. 13 is a schematic structural diagram of another terminal device according to an embodiment of this application; and
FIG. 14 is a schematic structural diagram of another service distribution platform according to an embodiment of this application.

### DESCRIPTION OF EMBODIMENTS

The following describes the embodiments of this application with reference to accompanying drawings.

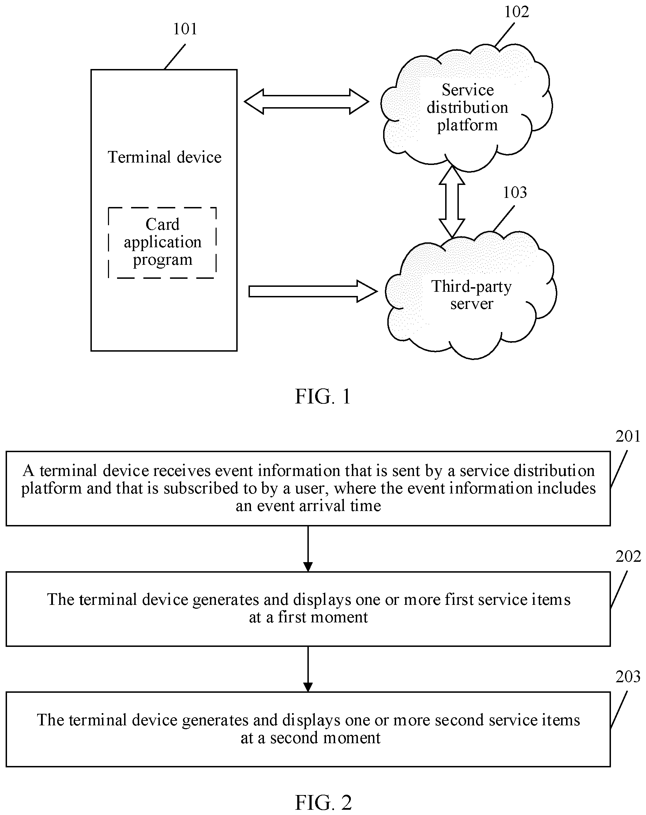

FIG. 1 is a schematic diagram of a system architecture of a service recommendation method according to an embodiment of this application. As shown in FIG. 1, the system architecture includes a terminal device 101, a service distribution platform 102, and a third-party server 103.

The terminal device 101 may be user equipment (User Equipment, LTE), to be specific, a device that provides a user with voice and/or data connectivity; or may be a handheld device or a vehicle-mounted device that has a wireless connection function. Common terminal devices include a mobile phone, a tablet computer, a notebook computer, a palmtop computer, a mobile internet device (mobile internet device, MID), and an internet of things device, a wearable device (such as a smartwatch, a smart band, or a pedometer), and the like. A card application program runs on the terminal device.

The service distribution platform 102 is a server connected to the terminal device 101 and the third-party server 103.

The third-party server 103 may be a server of Ctrip, a server of Kuaidi 100, a Taobao server, a server of Railway 12306, or the like.

FIG. 2 is a schematic flowchart of a service recommendation method according to an embodiment of this application. As shown in FIG. 2, the method includes the following steps.

S201. A terminal device receives event information that is sent by a service distribution platform and that is subscribed to by a user, where the event information includes an event arrival time.

The event information is sent by a third-party server to the terminal device by using the service distribution platform. The third-party server is a server that provides a third-party application service, for example, a server of Ctrip, a server of Kuaidi 100, a server of Taobao, a server of Railway 12306, and a server of Damai.

Before the terminal device receives the event information that is sent by the service distribution platform and that is subscribed to by the user, the terminal device binds a system account of the user to an account registered by the user with the third-party server. The system account is an account registered by the user with the service distribution platform.

When the user triggers an event on the third-party server (for example, purchasing a ticket on Railway 12306, purchasing something on Taobao, or purchasing a concert ticket on Damai), the third-party server sends event information to the terminal device by using the service distribution platform.

The event information includes an event arrival time. For example, when the event information is train ticket information or air ticket information, the event arrival time is a train departure time or an airplane departure time; and when the event information is concert information, the event arrival time is a concert start time.

S202. The terminal device generates and displays one or more first service items at a first moment.

The one or more first service items are related to at least a time interval t1 between the event arrival time and the first moment.

Specifically, the first service items include navigation, DiDi taxi hailing, a travel guide to a destination address, weather at the destination address in a next week, featured food at the destination address, a famous spot at a destination address, a music recommendation, a sports event, and the like.

S203. The terminal device generates and displays one or more second service items at a second moment.

The one or more second service items are related to at least a time interval t2 between the event arrival time and the second moment, the first moment is before the second moment, and the one or more first service items are not completely the same as the one or more second service items.

Specifically, the second service items include navigation, DiDi taxi hailing, a travel guide to a destination address, weather at the destination address in a next week, featured food at the destination address, a famous spot at a destination address, a commodity recommendation, a music recommendation, a sports event, and the like.

For example, the user purchases an air ticket from Beijing to Shenzhen on Ctrip at 8:00 on September 11, and a departure time (namely, the event arrival time) is 13:30 on October 8. One or more service items generated and displayed by the terminal device at 8:00 on September 11 may be recommending a purchase of a back cushion, a book, and the like. One or more service items generated and displayed by the terminal device at 10:00 on October 8 may be recommending a purchase of fruits, and the like. Service items recommended at the two dates are different because of different intervals between the airplane departure time and the two dates.

The one or more first service items are related to first user location information in addition to the time interval t1, and the one or more second service items are related to second user location information in addition to the time interval t2. The first user location information is location information of the user at the first moment, and the second user location information is location information of the user at the second moment.

For example, the user purchases an air ticket from Beijing to Shenzhen on Ctrip, and a departure time (namely, the event arrival time) is 13:00 on October 8. When the user is in a shopping mall at 8:00 on September 15, one or more service items generated and displayed by the terminal device may be recommending a back cushion and a book in the shopping mall. When the user is near a Daoxiang village specialty store at 8:00 on October 7, one or more service items generated and displayed by the terminal device may be recommending eight pieces of specialties at Daoxiang village. When the user is near a Peking duck kitchen at 8:00 on October 8, one or more service items generated and displayed by the terminal device may be recommending Peking Duck.

In a possible embodiment, the one or more first service items are related to an event occurrence location in addition to the time interval t1, and the one or more second service items are related to the event occurrence location in addition to the time interval t2.

For example, the user purchases an air ticket from Shenzhen to Beijing on Ctrip, and a departure time (namely, the event arrival time) is 13:00 on October 8. One or more service items generated and displayed by the terminal device at 13:00 on October 6 may be recommending manners of going to Shenzhen Bao'an Airport, including four manners: taking a subway, taking a bus, DiDi carpooling, and DiDi private car hailing. One or more service items generated and displayed by the terminal device at 10:00 on October 8 may be recommending manners of going to Shenzhen Bao'an Airport, including three manners: taking a subway, DiDi carpooling, and DiDi private car hailing. One or more service items generated and displayed by the terminal device at 12:00 on October 8 may be recommending a manner of going to Shenzhen Bao'an Airport, including one manner: DiDi private car hailing.

For another example, the user purchases a concert ticket for a concert to be held at Shenzhen Bay Sports Center at 19:00 on November 18. When the user has arrived in Shenzhen at 19:00 on November 16, one or more service items generated and displayed by the terminal device may be weather in Shenzhen in next two days, a two-day travel guide to Shenzhen, Shenzhen food, and the like. One or more service items generated and displayed by the terminal device at 16:00 on November 17 may be recommending a purchase of support goods such as a glow stick, a concert bowknot headband, and a support call. One or more service items generated and displayed by the terminal device at 16:00 on November 18 may be recommending navigation, DiDi taxi hailing, and the like for going to the live concert.

In a possible embodiment, the one or more first service items are related to an event occurrence location in addition to the time interval t1 and the first user location information, and the one or more second service items are related to the event occurrence location in addition to the time interval t2 and the second user location information. The first user location information is the location information of the user at the first moment, and the second user location information is the location information of the user at the second moment.

For example, the user purchases an air ticket from Shenzhen to Beijing on Ctrip, and a departure time (namely, the event arrival time) is 13:00 on October 8. One or more service items generated and displayed by the terminal device at 13:00 on October 6 may be weather in Shenzhen in next two days, and the like. When the terminal device determines, based on location information of the user at 10:00 on October 8, that the user does not arrive at a Shenzhen airport, one or more service items generated and displayed by the terminal device at this time may be navigation, DiDi taxi hailing, flight information, and the like. When the terminal device determines, based on location information of the user at 10:00 on October 8, that the user has arrived at a Shenzhen airport, one or more service items generated and displayed by the terminal device at this time may be a travel guide to Beijing, featured food in Beijing, a music recommendation, a sports event, and the like. When the terminal device determines, based on location information of the user at 12:00 on October 8, that the user does not arrive at a Shenzhen airport, one or more service items generated and displayed by the terminal device at this time may be navigation, DiDi taxi hailing, flight information, and the like, and the user may determine whether to be rescheduled to another flight based on the flight information. When the terminal device determines, based on location information of the user at 12:00 on October 8, that the user has been in an airplane, one or more service items generated and displayed by the terminal device at this time may be a travel guide to Beijing, featured food in Beijing, a music recommendation, a sports event, and the like.

For another example, the user purchases a concert ticket for a concert to be held at Shenzhen Bay Sports Center at 19:00 on November 18. When the user has arrived in Shenzhen at 19:00 on November 16, one or more service items generated and displayed by the terminal device may be weather in Shenzhen in next two days, a two-day travel guide to Shenzhen, Shenzhen food, and the like. When the user does not arrive in Shenzhen at 16:00 on November 18, one or more service items generated and displayed by the terminal device may be navigation, Railway 12306, and the like. When the user has arrived in Shenzhen at 16:00 on November 18, one or more service items generated and displayed by the terminal device may be a sports event, a music recommendation, and the like. When the user does not arrive in Shenzhen at 18:00 on November 18, one or more service items generated and displayed by the terminal device may be DiDi taxi hailing, and the like. When the user has arrived in Shenzhen at 18:00 on November 18, one or more service items generated and displayed by the terminal device may be a music recommendation, and the like.

In a possible embodiment, the one or more first service items are related to a user's historical access service type in addition to the time interval t1; and the one or more second service items are related to the user's historical access service type in addition to the time interval t2.

It should be noted that the user's historical access service types include navigation, DiDi taxi hailing, a music recommendation, a sports event, weather in a next week, a travel guide, featured food, and the like. When one or more service items displayed by the terminal device include DiDi taxi hailing, the user performs an operation on DiDi taxi hailing in a manner such as touching and tapping the terminal device based on a requirement. This may be referred to as a user access service.

For example, the user purchases an air ticket from Shenzhen to Beijing on Ctrip, and a departure time (namely, the event arrival time) is 13:00 on October 8. The user's historical access service types include weather in Beijing in a next week, a travel guide to Beijing, a music recommendation, a sports event, navigation, DiDi taxi hailing, and flight information. The weather in Beijing in the next week and the travel guide to Beijing are types of services that are accessed by the user at a moment that is 48 hours before the event arrival time. The navigation, the music recommendation, and the sports event are types of services that are accessed by the user at a moment that is three hours before the event arrival time. The DiDi taxi hailing and the flight information are types of services that are accessed by the user at a moment that is one hour before the event arrival time. One or more service items generated and displayed by the terminal device at 13:00 on October 6 may be the weather in Beijing in the next week and the travel guide to Beijing. One or more service items generated and displayed by the terminal device may be the navigation, the music recommendation, and the sports event. One or more service items generated and displayed by the terminal device at 12:00 on October 8 may be the DiDi taxi hailing and the flight information.

In a possible embodiment, the one or more first service items are related to a user's historical access service type in addition to the time interval t1 and the first user location information, and the one or more second service items are related to the user's historical access service type in addition to the time interval t2 and the second user location information. The first user location information is the location information of the user at the first moment, and the second user location information is the location information of the user at the second moment.

For another example, the user purchases an air ticket from Shenzhen to Beijing on Ctrip, and a departure time (namely, the event arrival time) is 13:00 on October 8. The user's historical access service types include purchasing a specialty, purchasing a book, and purchasing a back cushion. Purchasing a back cushion is a type of a service that is accessed by the user at a moment that is 48 hours before the event arrival time and that is accessed when a home textile store is near a current location of the user. Purchasing a specialty is a type of a service that is accessed by the user at a moment that is three hours before the event arrival time and that is accessed when a specialty store is near a current location of the user. Purchasing a book is a type of a service that is accessed by the user at a moment that is two hours before the event arrival time and that is accessed when a book store is near a current location of the user. When a home textile store is near a current location of the user at 13:00 on October 6, one or more service items generated and displayed by the terminal device may be recommending a back cushion. When a specialty store is near a current location of the user at 11:00 on October 8, one or more service items generated and displayed by the terminal device may be recommending a specialty. When a book store is near a current location of the user at 12:00 on October 8, one or more service items generated and displayed by the terminal device may be recommending a book.

In a possible embodiment, the one or more first service items are related to a user's historical access service type in addition to the time interval t1 and the event occurrence location; and the one or more second service items are related to the user's historical access service type in addition to the time interval t2 and the event occurrence location.

For another example, the user purchases an air ticket from Shenzhen to Beijing on Ctrip, and a departure time (namely, the event arrival time) is 13:00 on October 8. The user's historical access service types include taking a subway, taking a bus, DiDi carpooling, and DiDi private car hailing. Types of services that are accessed by the user at a moment that is 48 hours before the event arrival time include taking a subway, taking a bus, DiDi carpooling, and DiDi private car hailing. Types of services that are accessed by the user at a moment that is three hours before the event arrival time include taking a subway, taking a bus, DiDi carpooling, and DiDi private car hailing. A type of a service that is accessed by the user at a moment that is one hour before the event arrival time includes DiDi private car hailing. One or more service items generated and displayed by the terminal device at 13:00 on October 6 may be recommending a manner of going to Shenzhen Bao'an Airport, including four manners of going to the airport: taking a subway, taking a bus, DiDi carpooling, and DiDi private car hailing. One or more service items generated and displayed by the terminal device at 10:00 on October 8 may be recommending a manner of going to Shenzhen Bao'an Airport, including three manners: taking a subway, DiDi carpooling, and DiDi private car hailing. One or more service items generated and displayed by the terminal device at 12:00 on October 8 may be recommending a manner of going to Shenzhen Bao'an Airport, including one manner: DiDi private car hailing.

In a possible embodiment, the one or more first service items are related to a user's historical access service type in addition to the time interval t1, the first user location information, and the event occurrence location, and the one or more second service items are related to the user's historical access service type in addition to the time interval t2, the second user location information, and the event occurrence location. The first user location information is the location information of the user at the first moment, and the second user location information is the location information of the user at the second moment.

For another example, the user purchases an air ticket from Shenzhen to Beijing on Ctrip, and a departure time (namely, the event arrival time) is 13:00 on October 8. The user's historical access service types include weather in Beijing in a next week, featured food in Beijing, a music recommendation, a sports event, navigation, and DiDi taxi hailing. The weather in Beijing in the next week and the featured food in Beijing are types of services that are accessed by the user at a moment that is 48 hours before the event arrival time. The navigation is a type of a service that is accessed by the user in three hours before the event arrival time and that is accessed before the user arrives at an airport. The sports event is a type of a service that is accessed by the user in three hours before the event arrival time and that is accessed when the user has arrived at an airport. The DiDi taxi hailing is a type of a service that is accessed by the user in one hour before the event arrival time and that is accessed before the user arrives at an airport. The music recommendation is a type of a service that is accessed by the user in one hour before the event arrival time and that is accessed when the user has arrived at an airport. One or more service items generated and displayed by the terminal device at 13:00 on October 6 may be the weather in Beijing in next two days and the featured food. When the terminal device determines, based on location information of the user at 10:00 on October 8, that the user does not arrive at a Shenzhen airport, one or more service items generated and displayed by the terminal device at this time may be the navigation. When the terminal device determines, based on location information of the user at 10:00 on October 8, that the user has arrived at a Shenzhen airport, one or more service items generated and displayed by the terminal device at this time may be the sports event, and the like. When the terminal device determines, based on location information of the user at 12:00 on October 8, that the user does not arrive at a Shenzhen airport, one or more service items generated and displayed by the terminal device at this time may be the DiDi taxi hailing. When the terminal device determines, based on location information of the user at 12:00 on October 8, that the user has arrived at an airport, one or more service items generated and displayed by the terminal device at this time may be the music recommendation.

Optionally, the user access service type may alternatively be another user's historical access service type.

The one or more first service items are carried on a first recommendation card; or the one or more second service items are carried on a second recommendation card.

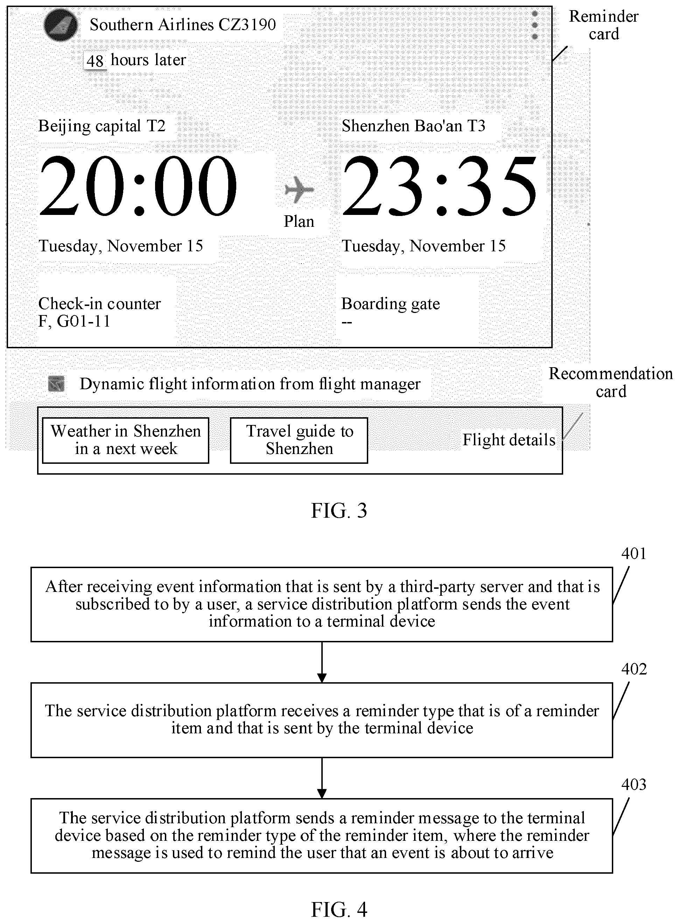

For the first recommendation card and the second recommendation card, refer to a schematic diagram of a recommendation card shown in FIG. 3. As shown in FIG. 3, the recommendation card carries three service items, and the three service items respectively include weather in Shenzhen in a next week, a travel guide to Shenzhen, and flight information.

In a possible embodiment, the one or more service items may be presented in a form of a hyperlink, an SMS message, a picture, or the like.

In a possible embodiment, when detecting an instruction for the first service item or the second service item, the terminal device invokes an interface that is of the device or the third-party service and that corresponds to the service item, to perform service interaction. For example, when detecting an instruction for the music recommendation, the terminal device invokes a local music program or an interface of third-party music, so that the user performs service interaction.

In a possible embodiment, after receiving the event information that is sent by the service distribution platform, the method further includes: obtaining and displaying one or more reminder items, where the one or more reminder items are related to the event information.

The event information further includes a source address or the event occurrence location, a destination address, a departure time or an event occurrence time, and an arrival time. The reminder item may be the source address or the event occurrence location, the destination address, the departure time, the event occurrence time, or the like. The terminal device may present the reminder item in a manner such as a hyperlink, an SMS message, an image, or the like.

In a possible embodiment, the method further includes: obtaining a reminder type of the reminder item based on a priority of the reminder item; sending a reminder type of the reminder item to the service distribution platform; and receiving a reminder message that is sent by the service distribution platform, where the reminder message is used to remind the user that an event is about to arrive.

Specifically, priorities of the reminder item include a "low" priority, a "high" priority, and a "very high" priority, and corresponding reminder types are respectively a manner 1, a manner 2, and a manner 3. The terminal device sends the priority of the reminder item and the corresponding reminder type to the service distribution platform. The service distribution platform may send the reminder message to the terminal device in a manner indicated by the manner 1; send the reminder message to the terminal device in a manner indicated by the manner 2; or send the reminder message to the terminal device in a manner indicated by the manner 3.

For example, the priorities of the reminder item include the "low" priority, the "high" priority, and the "very high" priority, and corresponding reminder types are respectively an email type, an SMS message type, and a telephone voice type. The service distribution platform sends the reminder message to the terminal device by using the email type; sends the reminder message to the terminal device by using the SMS message type; or sends the reminder message to the terminal device by using the telephone voice type.

It should be noted that a shorter time before the event arrival time leads to a higher priority of the reminder item.

For example, the user purchases an air ticket from Shenzhen to Beijing, and a departure time (namely, the event arrival time) is 13:00 on October 8. At a moment that is 48 hours before the event arrival time, the terminal device sets the priority of the reminder item to the "low" priority, and a corresponding reminder type is the email type. At a moment that is three hours before the event arrival time, the terminal device sets the priority of the reminder item to the "high" priority, and a corresponding reminder type is the SMS message type. At a moment that is one hour before the event arrival time, the terminal device sets the priority of the reminder item to the "very high" priority, and a corresponding reminder type is the telephone voice type.

At 13:00 on October 6, the priority of the reminder item is the "low" priority, the terminal device determines, based on the priority (to be specific, the "low" priority) of the reminder item, that the reminder type of the reminder item is the email type, the terminal device sends the email reminder type to the service distribution platform, and the service distribution platform sends the reminder message to the terminal device by using an email. At 10:00 on October 8, the priority of the reminder item is the "high" priority, the terminal device determines, based on the priority (to be specific, the "high" priority) of the reminder item, that the reminder type of the reminder item is the SMS message type, the terminal device sends the SMS message reminder type to the service distribution platform, and the service distribution platform sends the reminder message to the terminal device by using an SMS message. At 12:00 on October 8, the priority of the reminder item is the "very high" priority, the terminal device determines, based on the priority (to be specific, the "very high" priority) of the reminder item, that the reminder type of the reminder item is the telephone voice type, the terminal device sends the telephone voice reminder type to the service distribution platform, and the service distribution platform sends the reminder message to the terminal device by using a telephone voice.

In a possible implementation, the method further includes: receiving, at a specified moment, the reminder message sent by the service distribution platform, where the reminder message is used to remind the user that the event is about to arrive, and a reminder type of the reminder message corresponds to the priority of the reminder item.

Optionally, the specified moment may be a manually specified time, may be a default specified time, or may be moments that are 48 hours, 24 hours, three hours, two hours, one hour, half an hour, and the like before the event arrival time.

For example, the user purchases an air ticket from Shenzhen to Beijing, and a departure time (namely, the event arrival time) is 13:00 on October 8. At the moments that are 48 hours (to be specific, at 13:00 on October 6), 24 hours (to be specific, at 13:00 on October 7), three hours (to be specific, at 10:00 on October 8), two hours (to be specific, at 11:00 on October 8), one hour (to be specific, at 12:00 on October 8), and half an hour (to be specific, at 12:30 on October 8) before the event arrival time, the service distribution platform sends the reminder message to the terminal device in a same manner or different manners.

In a possible embodiment, the event information further includes the event occurrence location, and before the obtaining a reminder type of the reminder card based on a priority of the reminder item, the method further includes:
determining the priority of the reminder item based on a time interval t and a distance d; and sending, to the service distribution platform, the reminder type that is of the reminder message and that corresponds to the priority of the reminder item, where the time interval t is an interval between the specified moment and the event arrival moment, and the distance d is a distance between a location of the user at the specified time and the event occurrence location.

In addition to the foregoing mentioned time factor, a location of the user and/or the event occurrence location are/is other factors for determining the priority of the reminder item.

Further, the determining the priority of the reminder item based on a time interval t and a distance d includes:
determining the priority of the reminder item based on a relationship between the time interval t and a time threshold and a relationship between the distance d and a distance threshold.

Specifically, the time thresholds include three hours and one hour, and the distance thresholds include a 3-hour vehicle journey and a 1-hour vehicle journey. When the distance d is greater than the 3-hour vehicle journey, the terminal device sets the priority of the reminder item to the "low" priority when the time interval t is greater than three hours; the terminal device sets the priority of the reminder item to the "high" priority when the time interval t is greater than one hour and less than or equal to three hours; or the terminal device sets the priority of the reminder item to the "very high" priority when the time interval t is less than one hour.

When the distance d is greater than the 1-hour vehicle journey and less than or equal to the 3-hour vehicle journey, the terminal device sets the priority of the reminder item to the "low" priority when the time interval t is greater than three hours; the terminal device sets the priority of the reminder item to the "high" priority when the time interval t is greater than one hour and less than or equal to three hours; or the terminal device sets the priority of the reminder item to the "very high" priority when the time interval t is less than one hour.

When the distance d is greater than zero and less than or equal to the 1-hour vehicle journey, the terminal device sets the priority of the reminder item to the "low" priority when the time interval t is greater than three hours; the terminal device sets the priority of the reminder item to the "high" priority when the time interval t is greater than one hour and less than or equal to three hours; or the terminal device sets the priority of the reminder item to the "very high" priority when the time interval t is less than one hour.

In a possible embodiment, the one or more reminder items are carried on the reminder card.

For details of the reminder card, refer to a schematic diagram of a reminder card shown in FIG. 3. Reminder items carried on the reminder card shown in FIG. 3 include a source address, a destination address, a departure time, an arrival time, an aviation shift, a check-in counter, a boarding gate, and the like.

In a possible embodiment, the reminder item may be presented in a form of a hyperlink, an SMS message, a picture, or the like.

It can be learned that in the solution in this embodiment of this application, the terminal device generates and displays one or more service items at different moments before the event arrival time, at different locations of the user, based on the user's historical access service type, and/or at the event occurrence location. In this way, rich and accurate service items are recommended to the user, and a prior-art problem of simple and inaccurate recommended service content is overcome. In addition, different reminder types are used before and after the event arrival time to remind the user that the event is about to arrive, so that not only the prior-art problem of simple recommended service content is overcome, but also recommended content is more accurate.

FIG. 4 is a schematic flowchart of a service recommendation method according to an embodiment of this application. As shown in FIG. 4, the method includes the following steps.

S401. After receiving event information that is sent by a third-party server and that is subscribed to by a user, a service distribution platform sends the event information to a terminal device.

It should be noted that, for specific descriptions of the third-party server, refer to related descriptions of step S201. Details are not described herein again.

S402. The service distribution platform receives a reminder type that is of a reminder item and that is sent by the terminal device, where the reminder type is related to a priority of the reminder item.

In a possible embodiment, the reminder item is carried on a reminder card, and the reminder card is shown in FIG. 3.

In a possible embodiment, the reminder item may be presented in a form of a hyperlink, an SMS message, a picture, or the like.

S403. The service distribution platform sends a reminder message to the terminal device based on the reminder type of the reminder item, where the reminder message is used to remind the user that an event is about to arrive.

It should be noted that for specific descriptions of the reminder type of the reminder item, refer to related descriptions of step 203. Details are not described herein again.

In an embodiment, after obtaining the event information, the service distribution platform sends the event information to the terminal device. The terminal device generates and displays the foregoing one or more service items (including a first service item or a second service item) based on related descriptions of steps S201 to S203. The service distribution platform obtains one or more reminder items based on related descriptions of operations performed by the terminal device in steps S201 to S203, and sends the one or more reminder items to the terminal device. The terminal device displays the one or more reminder items. The service distribution platform obtains the priority of the reminder item and the corresponding reminder type. After determining a reminder type corresponding to the user, the service distribution platform sends the reminder message to the terminal device based on the reminder type corresponding to the user, to remind the user that the event is about to arrive.

In an embodiment, after obtaining the event information, the service distribution platform generates one or more service items (including a first service item or a second service item) based on related description of operations performed by the terminal device in steps S201 to S203, and sends the generated one or more service items to the terminal device. The terminal device displays the one or more service items. After obtaining the event information, the service distribution platform sends the event information to the terminal device. The terminal device obtains and displays one or more reminder items based on related descriptions in the method embodiment shown in steps S201 to S203, and determines a priority of the reminder item and a corresponding reminder type. After determining the reminder type corresponding to the user, the terminal device sends the reminder type corresponding to the user to the service distribution platform. The service distribution platform sends the reminder message to the terminal device based on the reminder type corresponding to the user, to remind the user that the event is about to arrive.

In an embodiment, after obtaining the event information, the service distribution platform generates one or more service items (including a first service item or a second service item) based on related description of operations performed by the terminal device in steps S201 to S203, and sends the generated one or more service items to the terminal device. The terminal device displays the one or more service items. The service distribution platform obtains one or more reminder items based on related descriptions of operations performed by the terminal device in steps S201 to S203, and sends the one or more reminder items to the terminal device. The terminal device displays the one or more reminder items. The service distribution platform obtains a priority of the reminder item and a corresponding reminder type. After determining a reminder type corresponding to the user, the service distribution platform sends the reminder message to the terminal device based on the reminder type corresponding to the user, to remind the user that the event is about to arrive.

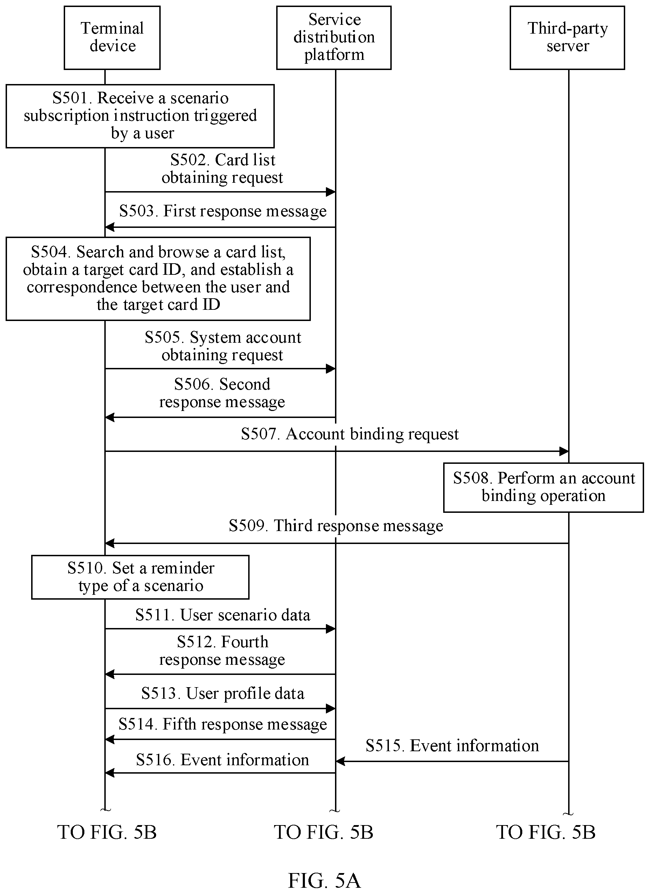

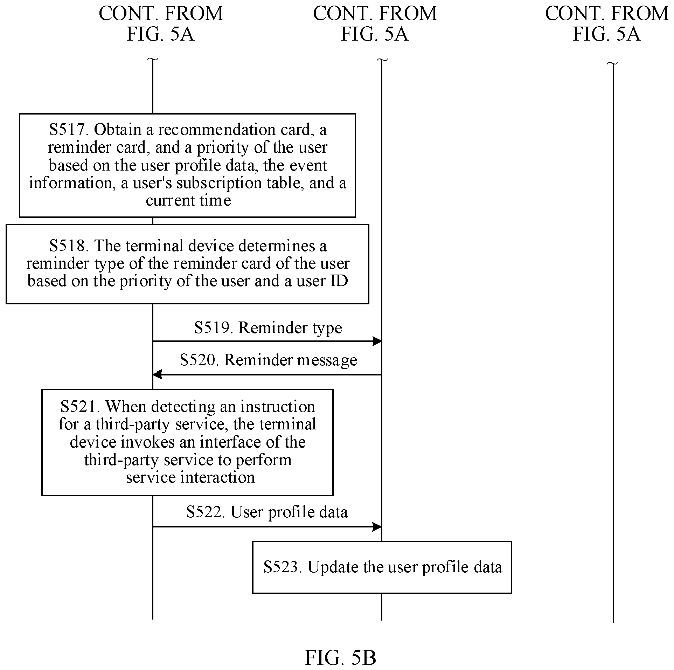

FIG. 5A and FIG. 5B are a schematic flowchart of interaction of a service recommendation method according to an embodiment of this application. In this embodiment, a service item is carried on a recommendation card, and a reminder item is carried on a reminder card. As shown in FIG. 5A and FIG. 5B, the method includes the following steps.

S501. A terminal device receives a scenario subscription instruction triggered by a user.

The foregoing scenario is a service within a specific range, for example, Ctrip, Kuaidi 100, Railway 12306, or Taobao.

S502. The terminal device sends a card list obtaining request to a service distribution platform.

The service distribution platform stores a card repository, the card repository integrates a third-party service card, and the third-party service card includes the recommendation card and the reminder card. The third-party service card is a card corresponding to a third-party service.

It should be noted that the third-party services include Ctrip, Kuaidi 100, Railway 12306, Taobao, and the like. Therefore, the card corresponding to the third-party service may also be referred to as a scenario card.

S503. The service distribution platform sends a first response message to the terminal device.

The first response message is used to respond to the card list obtaining request, and the first response message carries a card list.

S504. The terminal device searches and browses the card list, obtains a target card ID, and establishes a correspondence between the user and the target card ID.

After the terminal device obtains and displays the card list, the user searches or browses the card list by using the terminal device, and subscribes to the scenario card.

The terminal device establishes a correspondence between the scenario card and the user, and stores a user ID and the target card ID in a user's subscription card table. The user's subscription card table is shown in Table 1:

**Table 1**

| User ID | Card ID | ... | |
|---|---|---|---|
| XXX 1 | Card ID 1 | | |
| XXX 1 | Card ID 2 | | |
| XXX 2 | Card ID 1 | | |
| XXX 3 | Card ID 2 | | |

S505. The terminal device sends a system account obtaining request to the service distribution platform.

It should be noted that each user registers an account with the service distribution platform, to distinguish between different users and facilitate recording of related data of the user on the service distribution platform, for example, user profile data and user's historical scenario subscription information.

The user profile data includes a user identity, a user's historical access service type, an access time, and the like.

S506. The service distribution platform sends a second response message to the terminal device.

The second response message is used to respond to the system account obtaining request, and the second response message carries a system account of the user.

S507. The terminal device sends an account binding request to a third-party server.

The account binding request carries the system account of the user.

S508. The third-party server performs an account binding operation.

It should be noted that the third-party server is a server that provides a third-party application service, for example, a server of Ctrip, a server of Kuaidi 100, a server of Taobao, and a server of Railway 12306.

After receiving the account binding request, the third-party server obtains the system account of the user from the account binding request, and binds the system account of the user to a third-party account of the user. The third-party account of the user is an account registered by the user with the third-party server, for example, an account of Ctrip, an account of Taobao, and an account of Railway 12306.

S509. The third-party server sends a third response message to the terminal device.

The third response message is used to respond to the account binding request, and to notify the terminal device that the account is successfully bound.

S510. The terminal device sets a correspondence between a priority of a reminder item and a reminder type.

The reminder types include an SMS message reminder type, a telephone voice reminder type, an email reminder type, or any combination thereof.

Specifically, for different users, different priorities correspond to different reminder types. For example, reference may be made to Table 2:

**Table 2**

| User ID | Priority | Reminder type |
|---|---|---|
| XXX 1 | High priority | SMS message |
| XXX 1 | Very high priority | Voice call |
| XXX 2 | Low priority | Email |
| ... | | |

Table 2 is a user reminder policy table. As shown in Table 2, for a user whose identity is "XXX 1", when a priority is the "high" priority, a corresponding reminder type is the short message reminder type; for the user whose identity is "XXX 1", when a priority is the "very high" priority, a corresponding reminder type is the voice call reminder type; and for a user whose identity is "XXX 2", when a priority is the "low" priority, a corresponding reminder type is the email reminder type.

In a possible embodiment, reminder items of different priorities correspond to different reminder types.

Further, the terminal device determines the priority of the reminder item based on a time interval t and a distance d between a current location of the user and a source address or an event occurrence location.

It should be noted that the time interval t is a difference between a current moment and a departure moment marked on an air ticket, a train ticket, or a car ticket, or a difference between a current moment and an occurrence time marked on a concert ticket, a sports event ticket, or another ticket. For example, if the departure time on the air ticket is 13:15 on August 15 and the current time is 12:15 on August 13, the time interval t is two days and one hour. The source address is a departure place marked on the air ticket, the train ticket, or the car ticket. The event occurrence location is a place at which a concert, a sports event, or another activity is held.

**Table 3**

| Distance d between a current location of a user and a source address or an event occurrence location | d > 3-hour vehicle journey | | | 1-hour vehicle journey < d ≤ 3-hour vehicle journey | | | 0 < d ≤ 1-hour vehicle journey | | |
|---|---|---|---|---|---|---|---|---|---|
| Time interval t | t > 3h | 1h < t ≤ 3h | t < 1h | t > 3h | 1h < t ≤ 3h | t < 1h | t > 3h | 1h < t ≤ 3h | t < 1h |
| Priority | Low priority | High priority | Very high priority | Low priority | High priority | Very high priority | Low priority | High priority | Very high priority |

As shown in Table 3, when the distance d between the current location of the user and the source address or the event occurrence location is greater than the 3-hour vehicle journey, the terminal device sets the priority of the reminder item to the "low" priority when the time interval t is greater than three hours; the terminal device sets the priority of the reminder item to the "high" priority when the time interval t is greater than one hour and less than or equal to three hours; or the terminal device sets the priority of the reminder item to the "very high" priority when the time interval t is less than one hour.

When the distance d between the current location of the user and the source address or the event occurrence location is greater than the 1-hour vehicle journey and less than or equal to the 3-hour vehicle journey, the terminal device sets the priority of the reminder item to the "low" priority when the time interval t is greater than three hours; the terminal device sets the priority of the reminder item to the "high" priority when the time interval t is greater than one hour and less than or equal to three hours; or the terminal device sets the priority of the reminder item to the "very high" priority when the time interval t is less than one hour.

When the distance d between the current location of the user and the source address or the event occurrence location is greater than zero and less than or equal to the 1-hour vehicle journey, the terminal device sets the priority of the reminder item to the "low" priority when the time interval t is greater than three hours; the terminal device sets the priority of the reminder item to the "high" priority when the time interval t is greater than one hour and less than or equal to three hours; or the terminal device sets the priority of the reminder item to the "very high" priority when the time interval t is less than one hour.

S511. The terminal device sends user scenario data to the service distribution platform.

The user scenario data includes the user's subscription card table, and a table of a relationship between a priority of a reminder item and a reminder type.

S512. The service distribution platform sends a fourth response message to the terminal device.

The fourth response message is used to notify the terminal device that the service distribution platform has received the user scenario data.

S513. The terminal device sends the user profile data to the service distribution platform.

Specifically, the terminal device periodically sends the user profile data to the service distribution platform.

S514. The service distribution platform sends a fifth response message to the terminal device.

The fifth response message is used to notify the terminal device that the service distribution platform has received the user profile data. After obtaining the user profile data, the service distribution platform stores the user profile data in a user profile data table. The user profile data table is shown in Table 4:

**Table 4**

| User ID | Type of a service accessed by a user | Access time | ... |
|---|---|---|---|
| XXX 1 | DiDi taxi hailing | 8:00, October 4, 2018 | |
| XXX 2 | Music recommendation | 14:00, October 6, 2018 | |
| ... | | | |

S515. The third-party server sends event information to the service distribution platform.

When detecting that the user triggers an event on the third-party server, the third-party server obtains the event information, and then sends the event information to the service distribution platform. The event information includes information such as a user ID, an event ID, a time, an address, a service type, an event type, and a card ID.

The event information is stored in a user event table, as shown in the following Table 5:

**Table 5**

| User ID | Event ID | Time | Source address | Range address: Destination address | Service Type | Event Type | Card ID | ... |
|---|---|---|---|---|---|---|---|---|
| | | | | | | Boarding reminder | | |
| | | | | | | | | |

For example, when the third-party server is the server of Railway 12306, the event triggered by the user on the third-party server is booking a train ticket, and the event information includes the user ID, an order number (namely, the event ID), a departure time (namely, the time in the event information), a departure address and a destination address (namely, the source address and the destination address in the event information), the service type, the event type, and a card ID corresponding to Railway 12306. When the third-party server is the server of Taobao, the event triggered by the user on the third-party server is purchasing goods, and the event information includes the user ID, an order number (namely, the event ID), an order placement time (namely, the time in the event information), a shipping address and a delivery address (namely, the source address and the destination address in the event information), the service type, the event type, and a card ID corresponding to Taobao. When the third-party server is a server of Damai, the event triggered by the user on the server of Damai is purchasing a concert ticket, and the event information includes the user ID, an order number (namely, the event ID), a concert time (namely, the time in the event information), a concert location (namely, the address in the event information), the service type, and a card ID corresponding to Damai.

S516. The service distribution platform sends the event information to the terminal device.

S517. The terminal device obtains the recommendation card, the reminder card, and the priority of the reminder item based on the user profile data, the event information, the user's subscription table, and a current time.

Specifically, after obtaining the event information, the terminal device obtains the card ID and the event type from the event information, and then obtains a card template ID and a card template file path from a card metadata table based on the card ID and the event type. The card template IDs include a reminder card template ID and a recommendation card template ID. Correspondingly, the card template file paths include a reminder card template file path and a recommendation card template file path.

It should be noted herein that the card metadata table includes data such as the card ID, a card type, the event type, the card template ID, the card template file path, and a template type, as shown in Table 6:

**Table 6**

| Card ID | Card type | Event type | Card ID | Card template file path | Template type (a service type set, where there may be a plurality of service type sets) | ... |
|---|---|---|---|---|---|---|
| Card ID 1 | Reminder card | Priority reminder | Template ID 1 | | Featured food at a destination address, a famous spot at the destination address | |
| Card ID 2 | Recommendation card | Generate an order | Template ID 2 | | | |
| ... | | | | | | |

The terminal device obtains, based on the type of the service accessed by the user and the access time in the user profile data table, a type of a service whose access time falls within a preset range, and then obtains corresponding recommended content from a recommended service content table based on the type of the service, to obtain a recommendation card. The recommendation card includes the recommended content, the recommendation card template ID, and the recommendation card template file path.

For example, the types of the services accessed by the user include DiDi taxi hailing, navigation, a music recommendation, and a sports event, and access times are respectively 8:00, 9:30, 11:00, and 12:30. The user may access the four types of services on a same day or on different days. An event is taking an airplane from Shenzhen to Beijing at 10:15. Assuming that the preset range is a range between 60 minutes before the event arrival time and 60 minutes after an event arrival time, service types in the preset range include the navigation and the music recommendation.

In a possible embodiment, the terminal device obtains default recommended content from the recommended service content table based on the service type, and the default recommended content is preset.

The recommended service content table is shown in Table 7:

**Table 7**

| | Pre-event/post-event recommendation (with a low priority) | | | | | | | Pre-event reminder (with a high priority) | | | |
|---|---|---|---|---|---|---|---|---|---|---|---|
| Service Type | Travel guide to a destination address | Weather at a destination address in a next week | Featured food at a destination address | Famous spot at a destination address | Music recommendation | Sports event | ... | Taxi hailing | Query a shift due time | Navigation | ... |
| Air ticket | | | | | | | | | | | |
| Train ticket | | | | | | | | | | | |
| Scenic spot ticket | | | | | | | | | | | |
| Football match ticket | | | | | | | | | | | |
| ... | | | | | | | | | | | |

The terminal device obtains and displays the reminder card based on the event information, the reminder card template ID, and the reminder card template file path, and the reminder card includes one or more reminder items.

The reminder card template file path is an RPK file of an installation-free program. After the terminal device obtains the event information and the reminder card template file path, when running a card application, the terminal device loads the reminder card template file path in a runtime of the card application, and a card is displayed.

Similarly, when running the card application, the terminal device loads the recommendation card template file path in the runtime of the card application, and a card is displayed.

The reminder card and the recommendation card are shown in FIG. 3.

The terminal device obtains the distance d based on the current location of the user and the address or the source address in the event information, obtains the time interval t based on an event arrival time in the event information and a current time, and then obtains the priority of the reminder item based on the distance d and the time interval t. For a specific process, refer to related descriptions in Table 2.

After obtaining the priority of the reminder item, the terminal device stores the user ID, the card ID, the card template ID, and the priority of the reminder item in a user card recommendation table.

It should be noted that different cards of a same user have different priorities. For example, a priority of the reminder card is higher than a priority of the recommendation card.

S518. The terminal device determines a reminder type of the reminder card of the user based on the priority of the reminder item and the user ID.

Specifically, the terminal device traverses the user reminder policy table based on the user ID and the priority of the reminder item, to obtain a reminder type of the user.

S519. The terminal device sends the reminder type of the user to the service distribution platform.

The reminder types include the voice call reminder type, the SMS message reminder type, the email reminder type, or any combination thereof.

S520. The service distribution platform sends a reminder message to the terminal device.

Specifically, when the reminder type is the voice call reminder type, the service distribution platform makes a call to the terminal device, to reminder the user by using a voice call; when the reminder type is the SMS message reminder type, the service distribution platform sends the reminder message to the terminal device by using an SMS message, to reminder the user; or when the reminder type is the email reminder type, the service distribution platform sends the reminder message to the terminal device by using an email, to reminder the user.

In a specific application scenario, after obtaining current location information of the user, the current time, and the time and the address in the event information, the terminal device obtains the distance d based on the current location information of the user and the address in the event information, and then obtains the time interval t based on the current time and the event arrival time in the event information. Then the terminal device obtains the priority of the reminder item based on the distance d and the time interval t. The terminal device traverses the user reminder policy table based on the user ID and the priority of the reminder item, to obtain the reminder type of the user, and sends the reminder type of the user to the service distribution platform. The service distribution platform sends the reminder message to the terminal device based on the reminder type of the user, to remind the user.

S521. When detecting an instruction for a third-party service, the terminal device invokes an interface of the third-party service to perform service interaction.

When detecting the instruction for the third-party service, the terminal device invokes the interface of the third-party service to start a third-party application, so that the user accesses or uses the third-party service.

S522. The terminal device sends the user profile data to the service distribution platform.

The terminal device records a type of a service used or accessed by the user, and sends the user ID, the type of the service used or accessed by the user, and the access time to the service distribution platform.

It should be noted that the user profile data includes the user ID, the type of the accessed service, and the accessed time.

S523. The service distribution platform updates the user profile data.

In a specific application scenario, the terminal device periodically performs an analysis based on the service type in the event information and the recommended service content table or a user profile table, to obtain the service type set; then obtains the recommendation card template ID and the recommendation card template file path based on the service type set and the card metadata table; and then obtains and displays the recommendation card based on the service type set, the recommendation card template ID, and the recommendation card template file path

In another specific application scenario, that an air ticket from Beijing to Shenzhen is booked on Ctrip is used as an example.

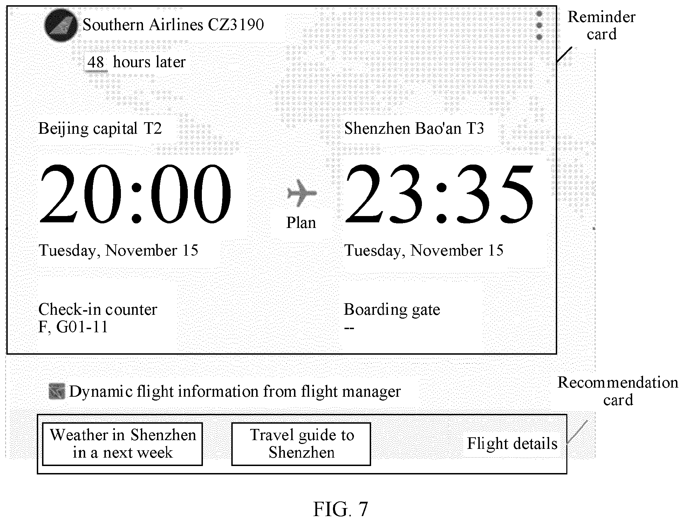

Pre-event recommendation 1: The following information is generated two days before an airplane takes off, and travel-related information is recommended. To be specific, service items on the recommendation card include the weather in Shenzhen in a next week and the travel guide to Shenzhen, as shown in FIG. 7.

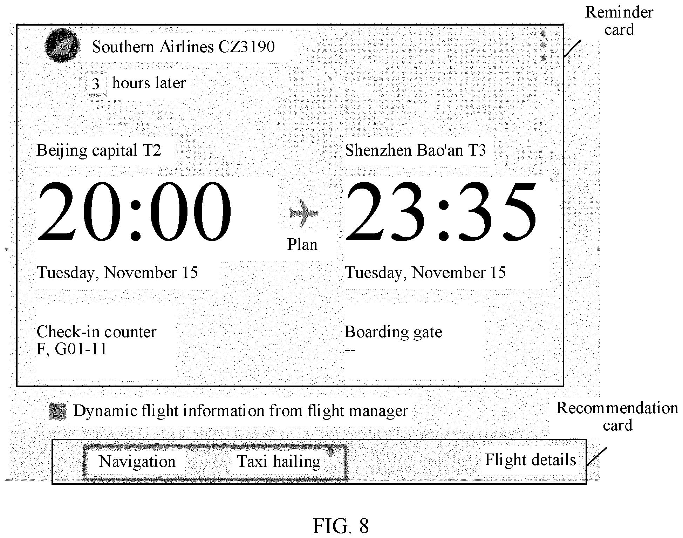

Pre-event recommendation 2: If there are three hours before an airplane takes off, and the user does not arrive at an airport at this time, information related to a vehicle for going to the airport is recommended to the user. To be specific, service items on the recommendation card include navigation and taxi hailing, as shown in FIG. 8.

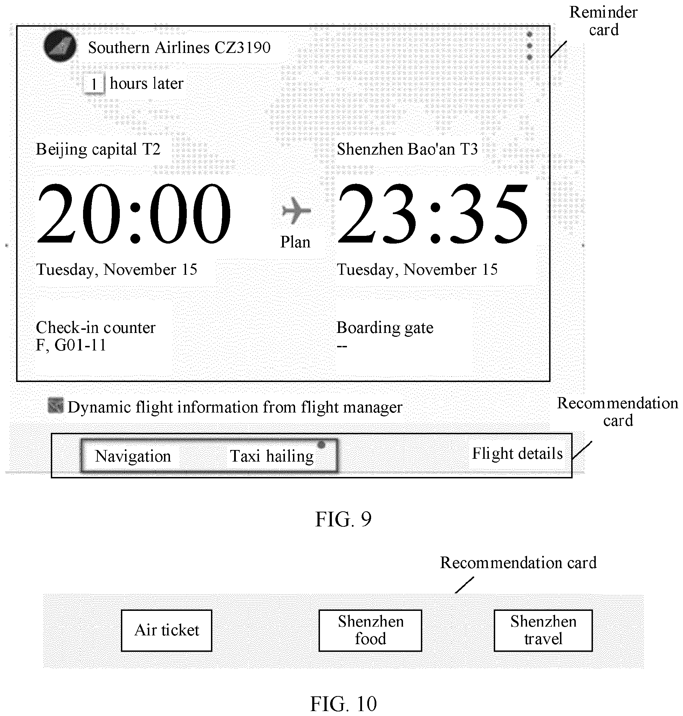

Pre-event reminder 1: If there is one hour before an airplane takes off, and a distance between the user and an airport is longer than the 1-hour vehicle journey, the service distribution platform finds that the priority of the reminder item is the "very high" priority based on a user location and a boarding time, and therefore, the service distribution platform may make a voice call to the terminal device of the user, to remind the user that the airplane is about to take off, as shown in FIG. 9.

Post-event recommendation: After a boarding event becomes a past, the terminal device generates the following recommendation card to recommend a purchase of a return ticket and travel-related information. To be specific, service items on the recommendation card include an air ticket, Shenzhen food, and Shenzhen travel, as shown in FIG. 10.

It can be learned that in this embodiment of this application, when the user triggers the event on the third-party server, for example, purchasing an air ticket, a ticket, a concert ticket, or a commodity, because the system account of the user and the account of the user on the third-party server are bound before, when the user triggers the event on the third-party server, the third-party server sends the event information to the terminal device of the user by using the service distribution platform. The terminal device generates and displays, based on information such as the user profile data and a time, a recommendation card and a reminder card that have rich content. The terminal device generates a personalized reminder policy based on the user profile data, the time, and a location, and sends the reminder policy to the service distribution platform. The service distribution platform sends the reminder message to the terminal device based on the reminder policy, to remind the user that the event is about to arrive, and to improve user experience.

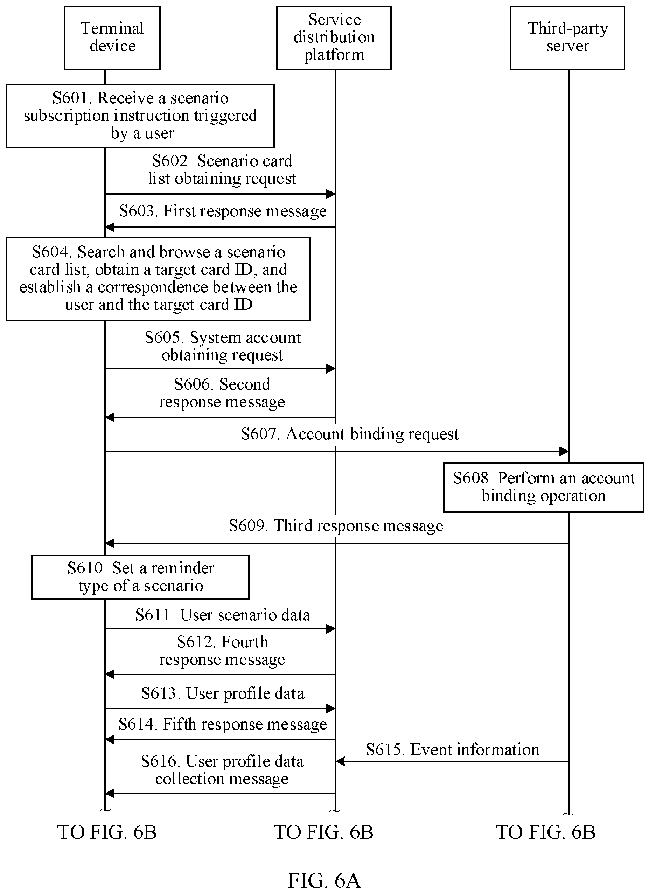

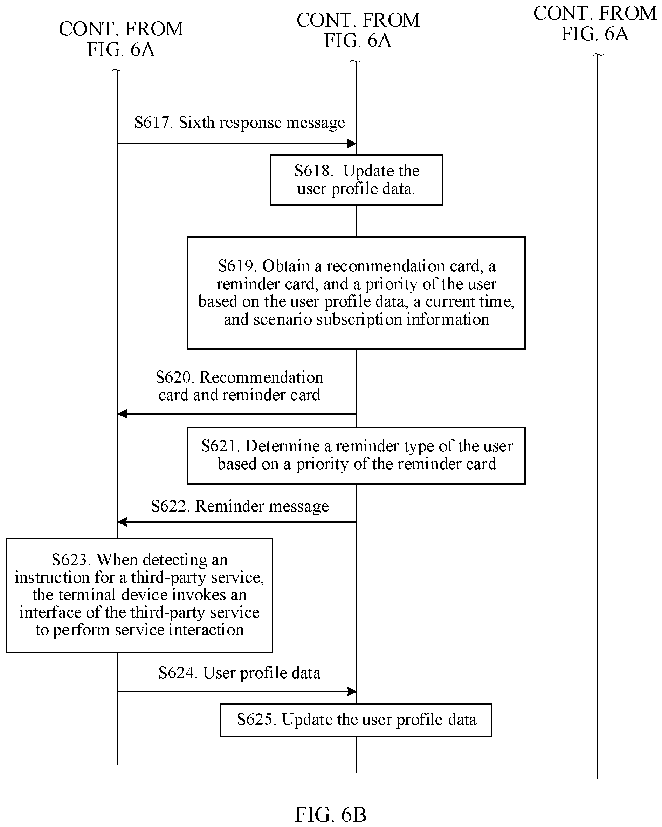

FIG. 6A and FIG. 6B are a schematic flowchart of interaction of a service recommendation method according to an embodiment of this application. In this embodiment, a service item is carried on a recommendation card, and a reminder item is carried on a reminder card. As shown in FIG. 6A and FIG. 6B, the method includes the following steps.

S601. A terminal device receives a scenario subscription instruction triggered by a user.

The foregoing scenario is a service within a specific range, for example, Ctrip, Kuaidi 100, Railway 12306, or Taobao.

S602. The terminal device sends a card list obtaining request to a service distribution platform.

The service distribution platform stores a card repository, and the card repository integrates a third-party service card. The third-party service card includes the recommendation card and the reminder card. The third-party service card is a card corresponding to a third-party service.

It should be noted that the third-party services include Ctrip, Kuaidi 100, Railway 12306, Taobao, and the like. Therefore, the card corresponding to the third-party service may also be referred to as a scenario card.

S603. The service distribution platform sends a first response message to the terminal device.

The first response message is used to respond to the card list obtaining request, and the first response message carries a card list.

S604. The terminal device searches and browses the card list, obtains a target card ID, and establishes a correspondence between a user and a card.

After the terminal device obtains and displays the card list, the user searches or browses the card list by using the terminal device, and subscribes to the scenario card.

The terminal device establishes a correspondence between the scenario card and the user, and stores a user ID and a card ID in a user's subscription card table.

S605. The terminal device sends a system account obtaining request to the service distribution platform.

It should be noted that each user registers an account with the service distribution platform, to distinguish between different users and facilitate recording of related data of the user on the service distribution platform, for example, user profile data and user's historical scenario subscription information.

The user profile data includes a user identity, a user's historical access service type, an access time, and the like.

S606. The service distribution platform sends a second response message to the terminal device.

The second response message is used to respond to the system account obtaining request, and the second response message carries a system account of the user.

S607. The terminal device sends an account binding request to a third-party server.

The account binding request carries the system account of the user.

S608. The third-party server performs an account binding operation.

It should be noted that the third-party server is a server that provides a third-party application service, for example, a server of Ctrip, a server of Kuaidi 100, a server of Taobao, and a server of Railway 12306.

After receiving the account binding request, the third-party server obtains the system account of the user from the account binding request, and binds the system account of the user to a third-party account of the user. The third-party account of the user is an account registered by the user with the third-party server, for example, an account of Ctrip, an account of Taobao, and an account of Railway 12306.

S609. The third-party server sends a third response message to the terminal device.

The third response message is used to respond to the account binding request, and to notify the terminal device that the account is successfully bound.

S610. The terminal device sets a correspondence between a priority of a reminder item and a reminder type.

The reminder types include an SMS message reminder type, a telephone voice reminder type, an email reminder type, or any combination thereof.

Further, the terminal device determines the priority of the reminder item based on a time interval t and a distance d between a current location of the user and a source address or an event occurrence location.

It should be noted that the time interval t is a difference between a current moment and a departure moment marked on an air ticket, a train ticket, or a car ticket, or a difference between a current moment and an occurrence time marked on a concert ticket, a sports event ticket, or another ticket. For example, if the departure time on the air ticket is 13:15 on August 15 and a current time is 12:15 on August 13, the difference between the current moment and the occurrence time marked on the concert ticket, the sports event ticket, or the another ticket is two days and one hour. The source address is a departure place marked on the air ticket, the train ticket, or the car ticket. The event occurrence location is a place at which a concert, a sports event, or another activity is held.

S611. The terminal device sends user scenario data to the service distribution platform.

The user scenario data includes the user's subscription card table, and a table of a relationship between a priority of a reminder item and a reminder type.

S612. The service distribution platform sends a fourth response message to the terminal device.

The fourth response message is used to notify the terminal device that the service distribution platform has received the user scenario data.

S613. The terminal device sends the user profile data to the service distribution platform.

S614. The service distribution platform sends a fifth response message to the terminal device.

The fifth response message is used to notify the terminal device that the service distribution platform has received the user profile data.

S615. The third-party server sends event information to the service distribution platform.

When detecting that the user triggers an event on the third-party server, the third-party server obtains the event information, and then sends the event information to the service distribution platform. The event information includes information such as a user ID, an event ID, a time, an address, a service type, an event type, and a card ID.

For example, when the third-party server is the server of Railway 12306, the event triggered by the user on the third-party server is booking a train ticket, and the event information includes the user ID, an order number (namely, the event ID), a departure time (namely, the time in the event information), a departure address and a destination address (namely, the source address and the destination address in the event information), the service type, the event type, and a card ID corresponding to Railway 12306. When the third-party server is the server of Taobao, the event triggered by the user on the third-party server is purchasing goods, and the event information includes the user ID, an order number (namely, the event ID), an order placement time (namely, the time in the event information), a shipping address and a delivery address (namely, the source address and the destination address in the event information), the service type, the event type, and a card ID corresponding to Taobao. When the third-party server is a server of Damai, the event triggered by the user on the server of Damai is purchasing a concert ticket, and the event information includes the user ID, an order number (namely, the event ID), a concert time (namely, the time in the event information), a concert location (namely, the address in the event information), the service type, and a card ID corresponding to Damai.

S616. The service distribution platform sends a user profile data collection request to the terminal device.

After receiving the event information, the service distribution platform stores the event information in a user event table.

S617. The terminal device sends a sixth response message to the service distribution platform.

The sixth response message is used to respond to the user profile data collection request of a merchant, and the sixth response message carries the user profile data.

S618. The service distribution platform updates the user profile data.

After obtaining the user profile data, the service distribution platform updates user profile data in a user profile table.

S619. The service distribution platform obtains the recommendation card, the reminder card, and the priority of the reminder item based on the user profile data, a current time, and the scenario subscription information.

After obtaining the event information, the service distribution platform obtains the card ID and the event type from the event information, and then obtains a card template ID and a card template file path from a card metadata table based on the card ID and the event type. The card template IDs include a reminder card template ID and a recommendation card template ID. Correspondingly, the card template file paths include a reminder card template file path and a recommendation card template file path.

For details of the card metadata table, refer to related descriptions in Table 3. Details are not described herein again.

The service distribution platform obtains, based on the type of the service accessed by the user and the access time in the user profile data table, a type of a service whose access time falls within a preset range, and then obtains corresponding recommended content from a recommended service content table based on the service type, to obtain a recommendation card. The recommendation card includes the recommended content, the recommendation card template ID, and the recommendation card template file path.

For example, the types of the services accessed by the user include DiDi taxi hailing, navigation, a music recommendation, and a sports event, and access times are respectively 8:00, 9:30, 11:00, and 12:30. The user may access the four types of services on a same day or on different days. An event is taking an airplane from Shenzhen to Beijing at 10:15. Assuming that the preset range is a range between 60 minutes before the event arrival time and 60 minutes after an event arrival time, service types in the preset range include the navigation and the music recommendation.

In a possible embodiment, the service distribution platform obtains default recommended content from the recommended service content table based on the service type, and the default recommended content is preset.

S620. The service distribution platform sends the recommendation card and the reminder card to the terminal device.

The reminder card includes the event information, the reminder card template ID, and the reminder card template file path. After obtaining the reminder card and the recommendation card, the terminal device displays the recommendation card and the reminder card.

Specifically, the reminder card template file path is an RPK file of an installation-free program. After the terminal device receives the reminder card, when running a card application, the terminal device loads the reminder card template file path in a runtime of the card application, and a card is displayed.

Likewise, the terminal device displays the recommendation card on the terminal device in the foregoing method.

S621. The service distribution platform determines a reminder type of the user based on a priority of the reminder item.

The service distribution platform obtains the distance d based on the current location of the user and the address or a source address in the event information, obtains the time interval t based on an event arrival time in the event information and a current time, and then obtains the priority of the reminder item based on the distance d and the time interval t. For a specific process, refer to related descriptions in Table 2.

Specifically, the service distribution platform traverses the user reminder policy table based on the user ID and the priority of the reminder item, to obtain the reminder type of the user.

S622. The service distribution platform sends a reminder message to the terminal device.

Specifically, when the reminder type is the voice call reminder type, the service distribution platform makes a call to the terminal device, to reminder the user by using a voice call; when the reminder type is the SMS message reminder type, the service distribution platform sends the reminder message to the terminal device by using an SMS message, to reminder the user; or when the reminder type is the email reminder type, the service distribution platform sends the reminder message to the terminal device by using an email, to reminder the user.

S623. When detecting an instruction for a third-party service, the terminal device invokes an interface of the third-party service to perform service interaction.

When detecting the instruction for the third-party service, the terminal device invokes the interface of the third-party service to start a third-party application, so that the user accesses or uses the third-party service.

S624. The terminal device sends the user profile data to the service distribution platform.

The terminal device records a type of a service used or accessed by the user, and sends the user ID, the type of the service used or accessed by the user, and the access time to the service distribution platform.

It should be noted that the user profile data includes the user ID, the type of the accessed service, and the accessed time.

S625. The service distribution platform updates the user profile data.

In a specific application scenario, after the terminal device sends current location information of the user, the current time, and the time and the address in the event information to the service distribution platform, the service distribution platform obtains the distance d based on the current location information of the user, the current time, and the time and the address in the event information, and then obtains the time interval t based on the current time and the event arrival time in the event information. Then the terminal device obtains the priority of the reminder item based on the distance d and the time interval t. The terminal device traverses the user reminder policy table based on the user ID and the priority of the reminder item, to obtain the reminder type of the user. The service distribution platform sends the reminder message to the terminal device based on the reminder type of the user, to remind the user.

In a specific application scenario, the service distribution platform periodically performs an analysis based on the service type in the event information and the recommended service content table or a user profile table, to obtain the service type set; then obtains the recommendation card template ID and the recommendation card template file path based on the service type set and the card metadata table; and then sends the service type set, the recommendation card template ID, and the recommendation card template file path to the terminal device. The terminal device obtains and displays the recommendation card.

It can be learned that in this embodiment of this application, when the user triggers the event on the third-party server, for example, purchasing an air ticket, a ticket, a concert ticket, or a commodity, because the system account of the user and the account of the user on the third-party server are bound before, when the user triggers the event on the third-party server, the third-party server sends the event information to the service distribution platform. The service distribution platform generates, based on information such as the user profile data and a time, a recommendation card and a reminder card that have rich content, and sends the recommendation card and the reminder card to the terminal device of the user for display. The service distribution platform generates a personalized reminder policy based on the user profile data, the time, and a location, and sends the reminder policy to the terminal device based on the reminder policy, to remind the user that the event is about to arrive, and to improve user experience.

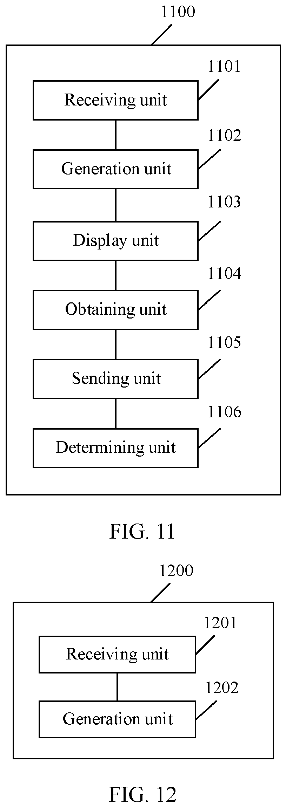

FIG. 11 is a schematic structural diagram of a terminal device according to an embodiment of this application. As shown in FIG. 11, the terminal device 1100 includes:
a receiving unit 1101, configured to receive event information that is sent by a service distribution platform and that is subscribed to by a user, where the event information includes an event arrival time;
a generation unit 1102, configured to: generate one or more first service items at a first moment, and generate one or more second service items at a second moment; and
a display unit 1103, configured to: display the one or more first service items after the generation unit generates the one or more first service items, and display the one or more second service items after the generation unit generates the one or more second service items, where the one or more first service items are related to at least a time interval t1 between the event arrival time and the first moment, and the one or more second service items are related to at least a time interval t2 between the event arrival time and the second moment, where
the first moment is before the second moment, and the one or more first service items are not completely the same as the one or more second service items.

In a possible embodiment, the one or more first service items are further related to first user location information;
the one or more second service items are further related to second user location information; and
the first user location information is location information of the user at the first moment, and the second user location information is location information of the user at the second moment.

In a possible embodiment, the one or more first service items are further related to an event occurrence location; and the one or more second service items are further related to the event occurrence location.

In a possible embodiment, the one or more first service items are further related to a user's historical access service type; and the one or more second service items are further related to the user's historical access service type.

In a possible embodiment, the one or more first service items are carried on a first recommendation card; or the one or more second service items are carried on a second recommendation card.

In a possible embodiment, after the receiving unit receives the event information that is sent by the service distribution platform, the terminal device 1100 further includes:
an obtaining unit 1104, configured to obtain one or more reminder items, where the one or more reminder items are related to the event information, where
the display unit 1103 is further configured to display the one or more reminder items.

In a possible embodiment, the terminal device 1100 further includes a sending unit 1105;
the obtaining unit 1104 is further configured to obtain a reminder type of the reminder item based on a priority of the reminder item;
the sending unit 1105 is configured to send the reminder type of the reminder item to the service distribution platform; and
the receiving unit 1101 is further configured to receive a reminder message that is sent by the service distribution platform based on the reminder type of the reminder item, where the reminder message is used to remind the user that an event is about to arrive.

In a possible embodiment, the receiving unit 1101 is specifically configured to:
receive, at a specified moment, the reminder message sent by the service distribution platform, where the reminder message is used to remind the user that the event is about to arrive; and
a reminder type of the reminder message corresponds to the priority of the reminder item.

In a possible embodiment, the event information further includes the event occurrence location, and before the obtaining unit obtains a reminder type of the reminder card based on the priority of the reminder item, the terminal device 1100 further includes:
a determining unit 1106, configured to determine the priority of the reminder item based on a time interval t and a distance d, where
the sending unit 1105 is further configured to send, to the service distribution platform, the reminder type that is of the reminder message and that corresponds to the priority of the reminder item, where
the time interval t is an interval between the specified moment and the event arrival moment, and the distance d is a distance between a location of the user at the specified time and the event occurrence location.

In a possible embodiment, the determining unit 1106 is specifically configured to:
determine the priority of the reminder item based on a relationship between the time interval t and a time threshold and a relationship between the distance d and a distance threshold.

In a possible embodiment, the one or more reminder items are carried on the reminder card.

It should be noted that the foregoing units (the receiving unit 1101, the generation unit 1102, the display unit 1103, the obtaining unit 1104, the sending unit 1105, and the determining unit 1106) are configured to: perform related steps in the method embodiment shown in steps S201 to S203, perform related steps in the method embodiment shown in steps S501 to S523, or perform related steps in the method embodiment shown in steps S601 to S625.

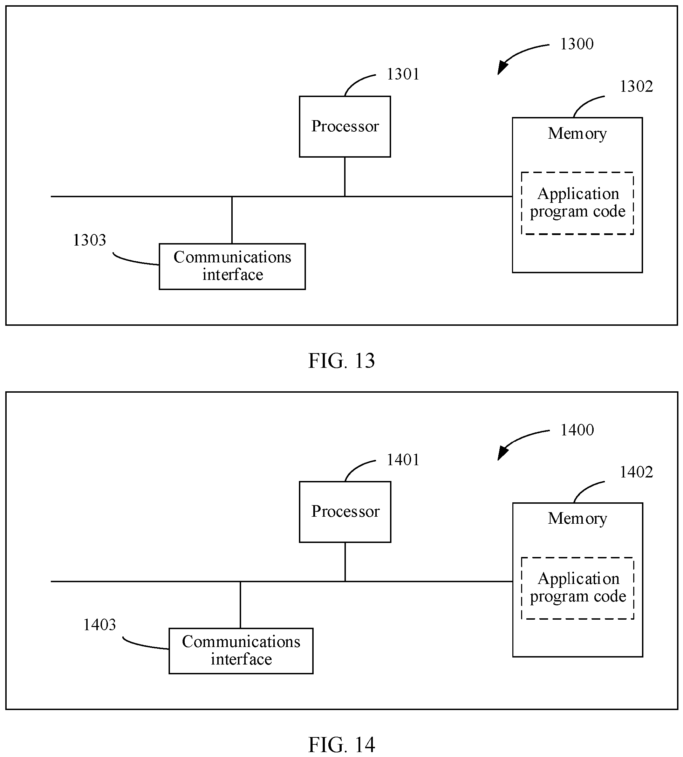

In this embodiment, the terminal 1100 is presented in a form of a unit. The "unit" herein may be an application-specific integrated circuit (application-specific integrated circuit, ASIC), a processor and a memory that execute one or more software or firmware programs, an integrated logic circuit, and/or another device that can provide the foregoing functions. In addition, the generation unit 1102, the display unit 1103, the obtaining unit 1104, and the determining unit 1106 may be implemented by using a processor 1301 of a terminal device shown in FIG. 13, and the receiving unit 1101 and the sending unit 1105 may be implemented by using a communications interface 1303 of the terminal device shown in FIG. 13.

FIG. 12 is a schematic structural diagram of a service distribution platform according to an embodiment of this application. As shown in FIG. 12, the service distribution platform 1200 includes:
a sending unit 1201, configured to: after a receiving unit receives event information that is sent by a third-party server and that is subscribed to by a user, send the event information to a terminal device.

The receiving unit 1202 is further configured to receive a reminder type that is of a reminder item and that is sent by the terminal device. The reminder type is related to a priority of the reminder item.

The sending unit 1201 is further configured to send a reminder message to the terminal device based on the reminder type of the reminder item. The reminder message is used to remind the user that an event is about to arrive.

In a possible embodiment, the reminder item is carried on a reminder card.

It should be noted that the foregoing units (the sending unit 1201 and the receiving unit 1202) are configured to: perform related steps in the method embodiment shown in steps S301 to S303, perform related steps in the method embodiment shown in steps S501 to S523, or perform related steps in the method embodiment shown in steps S601 to S625. Details are not described herein.

In this embodiment, the service distribution platform 1200 is presented in a form of a unit. The "unit" herein may be an application-specific integrated circuit (application-specific integrated circuit, ASIC), a processor and a memory that execute one or more software or firmware programs, an integrated logic circuit, and/or another device that can provide the foregoing functions. In addition, the sending unit 1201 and the receiving unit 1202 may alternatively be implemented by using a communications interface 1403 of a service distribution platform shown in FIG. 14.

As shown in FIG. 13, a terminal device 1300 may be implemented by using a structure in FIG. 13. The terminal device 1300 includes at least one processor 1301, at least one memory 1302, and at least one communications interface 1303. The processor 1301, the memory 1302, and the communications interface 1303 are connected and complete mutual communication by using a communications bus.

The processor 1301 may be a general-purpose central processing unit (CPU), a microprocessor, an application-specific integrated circuit (application-specific integrated circuit, ASIC), or one or more integrated circuits for controlling program execution of the foregoing solution.

The communications interface 1303 is configured to communicate with another device or a communications network such as the Ethernet, a radio access network (RAN), or a wireless local area network (Wireless Local Area Networks, WLAN).

The memory 1302 may be a read-only memory (read-only memory, ROM), another type of static storage device that can store static information and a static instruction, a random access memory (random access memory, RAM), or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, this is not limited thereto. The memory may exist independently, and be connected to the processor by using the bus. The memory may alternatively be integrated with the processor.

The memory 1302 is configured to store application program code for executing the foregoing solutions, and the processor 1301 controls the execution. The processor 1301 is configured to execute the application program code stored in the memory 1302.

The code stored in the memory 1302 may be used to perform the foregoing service recommendation methods performed by the terminal device, for example, to perform the following steps: receiving event information that is sent by a service distribution platform and that is subscribed to by a user, where the event information includes an event arrival time; generating and displaying one or more first service items at a first moment, where the one or more first service items are related to at least a time interval t1 between the event arrival time and the first moment; and generating and displaying one or more second service items at a second moment, where the one or more second service items are related to at least a time interval t2 between the event arrival time and the second moment, where the first moment is before the second moment, and the one or more first service items are not completely the same as the one or more second service items.

As shown in FIG. 14, a service distribution platform 1400 may be implemented by using the structure in FIG. 13. The service distribution platform 1400 includes at least one processor 1401, at least one memory 1402, and at least one communications interface 1403. The processor 1401, the memory 1402, and the communications interface 1403 are connected and complete mutual communication by using a communications bus.

The processor 1401 may be a general-purpose central processing unit (CPU), a microprocessor, an application-specific integrated circuit (application-specific integrated circuit, ASIC), or one or more integrated circuits for controlling program execution of the foregoing solution.

The communications interface 1403 is configured to communicate with another device or a communications network such as the Ethernet, a radio access network (RAN), or a wireless local area network (Wireless Local Area Networks, WLAN).

The memory 1402 may be a read-only memory (read-only memory, ROM), another type of static storage device that can store static information and a static instruction, a random access memory (random access memory, RAM), or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, this is not limited thereto. The memory may exist independently, and be connected to the processor by using the bus. The memory may alternatively be integrated with the processor.

The memory 1402 is configured to store application program code for executing the foregoing solutions, and the processor 1401 controls the execution. The processor 1401 is configured to execute the application program code stored in the memory 1402.

The code stored in the memory 1402 may be used to perform the foregoing service recommendation methods performed by the service distribution platform, for example, to perform the following steps: after event information that is sent by a third-party server is received, sending the event information to a terminal device; receiving a reminder type that is of a reminder card of a user and that is sent by the terminal device; and sending a reminder message to the terminal device based on the reminder type of the reminder card of the user.

An embodiment of this application further provides a computer storage medium. The computer storage medium stores a computer program, the computer program includes a program instruction, and when the program instruction is executed by a processor, the processor is enabled to perform all or some methods performed by the terminal device.

An embodiment of this application further provides a computer storage medium. The computer storage medium stores a computer program, the computer program includes a program instruction, and when the program instruction is executed by a processor, the processor is enabled to perform all or some methods performed by the service distribution platform.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that all the embodiments described in this specification belong to example embodiments, and the involved actions and units are not necessarily required by this application.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the embodiments may be implemented by a program instructing related hardware. The program may be stored in a computer-readable storage medium. The storage medium may include a flash memory, a read-only memory (English: Read-Only Memory, ROM for short), a random access memory (English: Random Access Memory, RAM for short), a magnetic disk, and a compact disc.

The embodiments of this application are described in detail above. The principle and implementation of this application are described herein by using specific examples. The description about the embodiments of this application is merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

## Claims

1. A service recommendation method, carried out by a terminal device subscribing to a service distribution platform and accessing third-party services provided by third-party servers, comprising:
sending by the terminal device (101) a system account obtaining request to the service distribution platform (102),
receiving a second response message from the service distribution platform (102), wherein the second response message is used to respond to the system account obtaining request, and the second response message carries the system account of the user registered by the user with the service distribution platform for distinguishing between different users and facilitating recording of related data of the user on the service distribution platform;
sending by the terminal device (101) an account binding request to a third-party server (103); wherein the account binding request carries the system account of the user;
receiving by the terminal device (101) event information from the third-party server via the service distribution platform, said event information relating to an event triggered by the user on the third-party server (103) when the system account is bound by the third-party server with a third-party account registered by the user with the third-party server, wherein the event information comprises an event arrival time;
generating and displaying one or more first service items at a first moment, wherein the one or more first service items are related to at least a time interval t1 between the event arrival time and the first moment, wherein the one or more first service items may be presented as a hyperlink and/or an SMS message and/or a picture and/or a card; and
generating and displaying one or more second service items at a second moment, wherein the one or more second service items are related to at least a time interval t2 between the event arrival time and the second moment, wherein the one or more second service items may be presented as a hyperlink and/or an SMS message and/or a picture and/or a card, wherein
the first moment is before the second moment, and the one or more first service items are not completely the same as the one or more second service items;
wherein the one or more first service items are further related to first user location information;
the one or more second service items are further related to second user location information; and
the first user location information is location information of the user at the first moment, and the second user location information is location information of the user at the second moment; and
wherein the one or more first service items are carried on a first recommendation card; and
the one or more second service items are carried on a second recommendation card.

2. The method according to claim 1, wherein the event information further comprises an event occurrence location;
the one or more first service items are further related to the event occurrence location; and
the one or more second service items are further related to the event occurrence location.

3. The method according to claim 1 or 2, wherein the one or more first service items are further related to a user's historical access service type; and
the one or more second service items are further related to the user's historical access service type.

4. The method according to any one of claims 1 to 3, wherein after the receiving event information that is sent by the service distribution platform (102), the method further comprises:
obtaining and displaying one or more reminder items, wherein the one or more reminder items are related to the event information.

5. The method according to claim 4, wherein the method further comprises:
obtaining a reminder type of the reminder item based on a priority of the reminder item;
sending the reminder type of the reminder item to the service distribution platform (102); and
receiving a reminder message that is sent by the service distribution platform (102) based on the reminder type of the reminder item, wherein the reminder message is used to remind the user that an event is about to arrive.

6. The method according to claim 5, wherein the event information further comprises an event occurrence location, and before the obtaining a reminder type of the reminder item based on a priority of the reminder item, the method further comprises:
determining the priority of the reminder item based on a time interval t and a distance d; and
sending, to the service distribution platform (102), a reminder type of a reminder message corresponding to the priority of the reminder item, wherein
the time interval t is an interval between a specified moment and the event arrival moment, and the distance d is a distance between a location of the user at the specified moment and the event occurrence location.

7. The method according to claim 6, wherein the determining the priority of the reminder item based on a time interval t and a distance d comprises:
determining the priority of the reminder item based on a relationship between the time interval t and a time threshold and a relationship between the distance d and a distance threshold.

8. The method according to any one of claims 4 to 7, wherein the one or more reminder items are carried on a reminder card.

9. The method according to any one of claims 1-8, the first event information includes a ticket booking event information that comprises a departure city, an arrival city, and a departure time, the first recommendation comprises a recommendation related to the arrival city, and the second recommendation comprises a navigation recommendation in the departure city or a taxi hailing recommendation in the departure city.

10. The method according to any one of claims 1-9, the method further comprising generating and displaying one or more second service items at a third moment, the third moment is after the second moment, the third recommendation is different from the first recommendation and the second recommendation.

11. The method according to any one of claims 1-10, the third recommendation is further related to a historical access service type, and the historical access service type is related to a user operation performed on an application.

12. A terminal device (1300), comprising:
a memory (1302), configured to store an instruction; and
at least one processor (1301), coupled to the memory (1302), wherein
the instruction, when executed by the at least one processor (1301), causes the terminal device (1300) to perform the method according to any one of claims 1 to 11.

13. A service distribution platform (1400), comprising:
a memory (1402), configured to store an instruction; and
at least one processor (1401), coupled to the memory (1402), wherein
the instruction, when executed by the at least one processor (1401), causes the platform (1400) to perform the method according to any one of claims 1 to 11.

14. A computer storage medium, wherein the computer storage medium stores a computer program, the computer program comprises a program instruction, and when the program instruction is executed by a processor, the processor is enabled to perform the method according to any one of claims 1 to 11.

## Patentansprüche

1. Verfahren zur Dienstempfehlung, ausgeführt von einem Endgerät, das Abonnent auf einer Dienstvertriebsplattform ist und auf Dienste Dritter zugreift, die von Servern Dritter bereitgestellt werden, umfassend:
Senden, durch das Endgerät (101), einer Anfrage zum Beziehen eines Systemkontos an die Dienstvertriebsplattform (102),
Empfangen einer zweiten Antwortnachricht von der Dienstvertriebsplattform (102), wobei die zweite Antwortnachricht verwendet wird, um auf die Anfrage zum Beziehen eines Systemkontos zu antworten, und die zweite Antwortnachricht das Systemkonto des Nutzers mitführt, das von dem Nutzer bei der Dienstvertriebsplattform registriert wurde, um verschiedene Nutzer voneinander zu unterscheiden und das Aufzeichnen entsprechender Daten des Nutzers auf der Dienstvertriebsplattform zu ermöglichen, Senden, durch das Endgerät (101), einer Kontoverknüpfungsanfrage an einen Server eines Dritten (103), wobei die Kontoverknüpfungsanfrage das Systemkonto des Nutzers mitführt,
Empfangen, durch das Endgerät (101), von Ereignisinformationen von dem Server des Dritten über die Dienstvertriebsplattform, wobei die Ereignisinformationen ein Ereignis betreffen, das von dem Nutzer auf dem Server des Dritten (103) ausgelöst wird, wenn das Systemkonto durch den Server des Dritten mit einem Konto eines Dritten, das durch den Nutzer bei dem Server des Dritten registriert wurde, verknüpft wird, wobei die Ereignisinformationen eine Ereigniseintreffzeit umfassen,
Erzeugen und Anzeigen eines oder mehrerer erster Dienstelemente zu einem ersten Zeitpunkt, wobei das eine oder die mehreren ersten Dienstelemente mindestens ein Zeitintervall t1 zwischen der Ereigniseintreffzeit und dem ersten Zeitpunkt betreffen, wobei das eine oder die mehreren ersten Dienstelemente als ein Hyperlink und/oder eine SMS-Nachricht und/oder ein Bild und/oder eine Karte präsentiert werden können, und
Erzeugen und Anzeigen eines oder mehrerer zweiter Dienstelemente zu einem zweiten Zeitpunkt, wobei das eine oder die mehreren zweiten Dienstelemente mindestens ein zweites Zeitintervall t2 zwischen der Ereigniseintreffzeit und dem zweiten Zeitpunkt betreffen, wobei das eine oder die mehreren zweiten Dienstelemente als ein Hyperlink und/oder eine SMS-Nachricht und/oder ein Bild und/oder eine Karte präsentiert werden können, wobei
der erste Zeitpunkt vor dem zweiten Zeitpunkt liegt und das eine oder die mehreren ersten Dienstelemente nicht vollständig die gleichen sind wie die das eine oder die mehreren zweiten Dienstelemente,
wobei das eine oder die mehreren ersten Dienstelemente ferner erste Nutzerstandortinformationen betreffen,
das eine oder die mehreren zweiten Dienstelemente ferner zweite Nutzerstandortinformationen betreffen und
die ersten Nutzerstandortinformationen Standortinformationen des Nutzers zu dem ersten Zeitpunkt sind und die zweiten Nutzerstandortinformationen Standortinformationen des Nutzers zu dem zweiten Zeitpunkt sind und
wobei das eine oder die mehreren ersten Dienstelemente auf einer ersten Empfehlungskarte mitgeführt werden und
das eine oder die mehreren zweiten Dienstelemente auf einer zweiten Empfehlungskarte mitgeführt werden.

2. Verfahren nach Anspruch 1, wobei die Ereignisinformationen ferner einen Ort des Eintretens des Ereignisses umfassen,
das eine oder die mehreren ersten Dienstelemente ferner den Ort des Eintretens des Ereignisses betreffen und
das eine oder die mehreren zweiten Dienstelemente ferner den Ort des Eintretens des Ereignisses betreffen.

3. Verfahren nach Anspruch 1 oder 2, wobei das eine oder die mehreren ersten Dienstelemente ferner einen historischen Zugriffsdiensttyp des Nutzers betreffen und das eine oder die mehreren zweiten Dienstelemente ferner den historischen Zugriffsdiensttyp des Nutzers betreffen.

4. Verfahren nach einem der Ansprüche 1 bis 3, wobei nach dem Empfangen von Ereignisinformationen, die von der Dienstvertriebsplattform (102) gesendet werden, das Verfahren ferner umfasst:
Beziehen und Anzeigen eines oder mehrerer Erinnerungselemente, wobei das eine oder die mehreren Erinnerungselemente die Ereignisinformationen betreffen.

5. Verfahren nach Anspruch 4, wobei das Verfahren ferner Folgendes umfasst:
Beziehen eines Erinnerungstyps des Erinnerungselements basierend auf einer Priorität des Erinnerungselements,
Senden des Erinnerungstyps des Erinnerungselements an die Dienstvertriebsplattform (102) und
Empfangen einer Erinnerungsnachricht, die von der Dienstvertriebsplattform (102) gesendet wird, basierend auf dem Erinnerungstyp des Erinnerungselements, wobei die Erinnerungsnachricht verwendet wird, um den Nutzer daran zu erinnern, dass das Ereignis unmittelbar bevorsteht.

6. Verfahren nach Anspruch 5, wobei die Ereignisinformationen ferner einen Ort des Eintretens des Ereignisses umfassen und vor dem Beziehen eines Erinnerungstyps des Erinnerungselements basierend auf einer Priorität des Erinnerungselements das Verfahren ferner Folgendes umfasst:
Bestimmen der Priorität des Erinnerungselements basierend auf einem Zeitintervall t und einer Distanz d und
Senden, an die Dienstvertriebsplattform (102), eines Erinnerungstyps einer Erinnerungsnachricht entsprechend der Priorität des Erinnerungselements, wobei das Zeitintervall t ein Intervall zwischen einem spezifizierten Zeitpunkt und dem Zeitpunkt des Eintreffens des Ereignisses ist und die Distanz d eine Distanz zwischen einem Standort des Nutzers zu dem spezifizierten Zeitpunkt und dem Ort des Eintretens des Ereignisses ist.

7. Verfahren nach Anspruch 6, wobei das Bestimmen der Priorität des Erinnerungselements basierend auf einem Zeitintervall t und einer Distanz d Folgendes umfasst:
Bestimmen der Priorität des Erinnerungselements basierend auf einer Beziehung zwischen dem Zeitintervall t und einem Zeitgrenzwert und einer Beziehung zwischen der Distanz d und einem Distanzgrenzwert.

8. Verfahren nach einem der Ansprüche 4 bis 7, wobei das eine oder die mehreren Erinnerungselemente auf einer Erinnerungskarte mitgeführt werden.

9. Verfahren nach einem der Ansprüche 1 bis 8, die ersten Ereignisinformationen eine Ticketbuchungs-Ereignisinformation beinhalten, die eine Abfahrtsstadt, eine Ankunftsstadt und eine Abfahrtszeit umfasst, die erste Empfehlung eine Empfehlung betreffend die Ankunftsstadt umfasst und die zweite Empfehlung eine Navigationsempfehlung in der Abfahrtsstadt oder eine Taxirufempfehlung in der Abfahrtsstadt umfasst.

10. Verfahren nach einem der Ansprüche 1 bis 9, wobei das Verfahren ferner das Erzeugen und Anzeigen eines oder mehrerer zweiter Dienstelemente zu einem dritten Zeitpunkt umfasst, wobei der dritte Zeitpunkt nach dem zweiten Zeitpunkt liegt, sich die dritte Empfehlung von der ersten Empfehlung und der zweiten Empfehlung unterscheidet.

11. Verfahren nach einem der Ansprüche 1 bis 10, wobei die dritte Empfehlung ferner einen historischen Zugriffsdiensttyp betrifft und der historische Zugriffsdiensttyp einen auf einer Anwendung durchgeführten Nutzervorgang betrifft.

12. Endgerät (1300), umfassend:
einen Speicher (1302), der dazu konfiguriert ist, eine Anweisung zu speichern, und mindestens einen Prozessor (1301), der mit dem Speicher (1302) gekoppelt ist, wobei die Anweisung bei Ausführung durch den mindestens einen Prozessor (1301) das Endgerät (1300) veranlasst, das Verfahren nach einem der Ansprüche 1 bis 11 durchzuführen.

13. Dienstvertriebsplattform (1400), umfassend:
einen Speicher (1402), der dazu konfiguriert ist, eine Anweisung zu speichern, und mindestens einen Prozessor (1401), der mit dem Speicher (1402) gekoppelt ist, wobei die Anweisung bei Ausführung durch den mindestens einen Prozessor (1401) die Plattform (1400) veranlasst, das Verfahren nach einem der Ansprüche 1 bis 11 durchzuführen.

14. Computerspeichermedium, wobei das Computerspeichermedium ein Computerprogramm speichert, das Computerprogramm eine Programmanweisung speichert und bei Ausführung der Programmanweisung durch einen Prozessor der Prozessor in die Lage versetzt wird, das Verfahren nach einem der Ansprüche 1 bis 11 durchzuführen.

## Revendications

1. Procédé de recommandation de service, mis en oeuvre par un dispositif terminal qui s'abonne à une plateforme de distribution de service et qui accède à des services tiers fournis par des serveurs tiers, comprenant les étapes consistant à :
envoyer par le dispositif terminal (101) une demande d'obtention de compte système à la plateforme de distribution de service (102),
recevoir un deuxième message de réponse provenant de la plateforme de distribution de service (102), le deuxième message de réponse étant utilisé pour répondre à la demande d'obtention de compte système, et le deuxième message de réponse transportant le compte système de l'utilisateur inscrit par l'utilisateur sur la plateforme de distribution de service pour distinguer les différents utilisateurs et faciliter l'enregistrement de données liées de l'utilisateur sur la plateforme de distribution de service ;
envoyer par le dispositif terminal (101) une demande d'association de comptes à un serveur tiers (103) ; dans lequel la demande d'association de comptes transporte le compte système de l'utilisateur ;
recevoir par le dispositif terminal (101) des informations d'événement provenant du serveur tiers par l'intermédiaire de la plateforme de distribution de service, lesdites informations d'événement étant liées à un événement déclenché par l'utilisateur sur le serveur tiers (103) lorsque le compte système est associé par le serveur tiers à un compte tiers inscrit par l'utilisateur sur le serveur tiers, les informations d'événement comprenant une heure d'arrivée d'événement ;
générer et afficher un ou plusieurs premiers éléments de service à un premier moment, les un ou plusieurs premiers éléments de service étant liés à au moins un intervalle de temps t1 entre l'heure d'arrivée d'événement et le premier moment, les un ou plusieurs premiers éléments de service pouvant être présentés sous la forme d'un hyperlien et/ou d'un message SMS et/ou d'une image et/ou d'une carte ; et
générer et afficher un ou plusieurs deuxièmes éléments de service à un deuxième moment, les un ou plusieurs deuxièmes éléments de service étant liés à au moins un intervalle de temps t2 entre l'heure d'arrivée d'événement et le deuxième moment, les un ou plusieurs deuxièmes éléments de service pouvant être présentés sous la forme d'un hyperlien et/ou d'un message SMS et/ou d'une image et/ou d'une carte, dans lequel
le premier moment est situé avant le deuxième moment, et les un ou plusieurs premiers éléments de service ne sont pas entièrement identiques aux un ou plusieurs deuxièmes éléments de service ;
dans lequel les un ou plusieurs premiers éléments de service sont également liés à des premières informations d'emplacement d'utilisateur ;
les un ou plusieurs deuxièmes éléments de service sont également liés à des deuxièmes informations d'emplacement d'utilisateur ; et
les premières informations d'emplacement d'utilisateur sont des informations d'emplacement de l'utilisateur au premier moment, et les deuxièmes informations d'emplacement d'utilisateur sont des informations d'emplacement de l'utilisateur au deuxième moment ; et
dans lequel les un ou plusieurs premiers éléments de service sont transportés sur une première carte de recommandation ; et
les un ou plusieurs deuxièmes éléments de service sont transportés sur une deuxième carte de recommandation.

2. Procédé selon la revendication 1, dans lequel les informations d'événement comprennent également un emplacement d'apparition d'événement ;
les un ou plusieurs premiers éléments de service sont également liés à l'emplacement d'apparition d'événement ; et
les un ou plusieurs deuxièmes éléments de service sont également liés à l'emplacement d'apparition d'événement.

3. Procédé selon la revendication 1 ou 2, dans lequel les un ou plusieurs premiers éléments de service sont également liés à un type de service d'accès historique d'un utilisateur ; et
les un ou plusieurs deuxièmes éléments de service sont également liés au type de service d'accès historique de l'utilisateur.

4. Procédé selon l'une quelconque des revendications 1 à 3, le procédé, après la réception d'informations d'événement qui sont envoyées par la plateforme de distribution de service (102), comprenant également l'étape consistant à :
obtenir et afficher un ou plusieurs éléments de rappel, les un ou plusieurs éléments de rappel étant liés aux informations d'événement.

5. Procédé selon la revendication 4, le procédé comprenant également les étapes consistant à :
obtenir un type de rappel de l'élément de rappel sur la base d'une priorité de l'élément de rappel ;
envoyer le type de rappel de l'élément de rappel à la plateforme de distribution de service (102) ; et
recevoir un message de rappel qui est envoyé par la plateforme de distribution de service (102) sur la base du type de rappel de l'élément de rappel, le message de rappel étant utilisé pour rappeler à l'utilisateur qu'un événement est sur le point d'arriver.

6. Procédé selon la revendication 5, dans lequel les informations d'événement comprennent également un emplacement d'apparition d'événement, et le procédé, avant l'obtention d'un type de rappel de l'élément de rappel sur la base d'une priorité de l'élément de rappel, comprenant également les étapes consistant à :
déterminer la priorité de l'élément de rappel sur la base d'un intervalle de temps t et d'une distance d ; et
envoyer, à la plateforme de distribution de service (102), un type de rappel d'un message de rappel correspondant à la priorité de l'élément de rappel, dans lequel l'intervalle de temps t est un intervalle entre un moment spécifié et le moment d'arrivée d'événement, et la distance d est une distance entre un emplacement de l'utilisateur au moment spécifié et l'emplacement d'apparition d'événement.

7. Procédé selon la revendication 6, dans lequel la détermination de la priorité de l'élément de rappel sur la base d'un intervalle de temps t et d'une distance d consiste à :
déterminer la priorité de l'élément de rappel sur la base d'une relation entre l'intervalle de temps t et un seuil de temps et d'une relation entre la distance d et un seuil de distance.

8. Procédé selon l'une quelconque des revendications 4 à 7, dans lequel les un ou plusieurs éléments de rappel sont transportés sur une carte de rappel.

9. Procédé selon l'une quelconque des revendications 1 à 8, dans lequel les premières informations d'événement contiennent des informations d'événement de réservation de billet qui comprennent une ville de départ, une ville d'arrivée et une heure de départ, la première recommandation comprend une recommandation liée à la ville d'arrivée, et la deuxième recommandation comprend une recommandation de navigation dans la ville de départ ou une recommandation d'appel de taxi dans la ville de départ.

10. Procédé selon l'une quelconque des revendications 1 à 9, le procédé comprenant également la génération et l'affichage d'un ou plusieurs deuxièmes éléments de service à un troisième moment, le troisième moment étant situé après le deuxième moment, la troisième recommandation étant différente de la première recommandation et de la deuxième recommandation.

11. Procédé selon l'une quelconque des revendications 1 à 10, la troisième recommandation étant également liée à un type de service d'accès historique, et le type de service d'accès historique étant lié à une opération d'utilisateur effectuée sur une application.

12. Dispositif terminal (1300), comprenant :
une mémoire (1302), configurée pour stocker une instruction ; et
au moins un processeur (1301), couplé à la mémoire (1302), dans lequel l'instruction, lorsqu'elle est exécutée par l'au moins un processeur (1301), amène le dispositif terminal (1300) à effectuer le procédé selon l'une quelconque des revendications 1 à 11.

13. Plateforme de distribution de service (1400), comprenant :
une mémoire (1402), configurée pour stocker une instruction ; et
au moins un processeur (1401), couplé à la mémoire (1402), dans laquelle l'instruction, lorsqu'elle est exécutée par l'au moins un processeur (1401), amène la plateforme (1400) à effectuer le procédé selon l'une quelconque des revendications 1 à 11.

14. Support de stockage informatique, le support de stockage informatique stockant un programme informatique, le programme informatique comprenant une instruction de programme, et lorsque l'instruction de programme est exécutée par un processeur, le processeur est capable d'effectuer le procédé selon l'une quelconque des revendications 1 à 11.
